# EUROPÄISCHE PATENTSCHRIFT

(11) **EP 2 626 614 B1**
(45) Veröffentlichungstag und Bekanntmachung des Hinweises auf die Patenterteilung: **29.04.2015**
(21) Anmeldenummer: 13154402.5
(22) Anmeldetag: 07.02.2013
(51) Int. Cl.: F16P 3/08

(54) **Schutzverfahren und -vorrichtung für eine Zugriffsfläche**
Protection method and apparatus for an access area
Dispositif et procédé de protection pour une surface d'accès

(30) Priorität: 07.02.2012 DE 202012100396 U
(43) Veröffentlichungstag der Anmeldung: 14.08.2013
(73) Patentinhaber: Weinmann, Peter, 91217 Hersbruck (DE)
(72) Erfinder: Weinmann, Peter, 91217 Hersbruck (DE)
(74) Vertreter: Götz, Georg Alois

(56) Entgegenhaltungen:
- EP-A2- 1 795 676
- DE-A1-102004 047 574
- DE-A1-102008 026 054
- DE-A1-102010 007 388

## Beschreibung

Die Erfindung betrifft ein Verfahren zur Überwachung eines Zutritts oder Zugriffs durch eine Zugriffsfläche. Die Erfindung betrifft außerdem eine Schutzvorrichtung mit einer bewegbaren Abdeckeinrichtung, die eine Zugriffs- oder Durchtrittsfläche in einer Zugriffsposition freigibt und in einer Abdeckposition abdeckt. Des Weiteren betrifft die Erfindung eine Anlage mit einer derartigen Schutzvorrichtung. Die Zugriffs- oder Durchtrittsfläche kann z.B. so positioniert werden, dass nur durch diese hindurch ein Zugriff oder Durchtritt zu einem zu überwachenden Bereich, z.B. dem Gefahrenbereich einer Maschine, insbesondere einer Prüfmaschine, möglich ist. Durch die Bewegung der Abdeckeinrichtung kann der Zugriff oder Durchtritt ermöglicht oder verhindert werden. Im Folgenden wird der Einfachheit halber die Zugriffs- oder Durchtrittsfläche als Zugriffsfläche bezeichnet.

Derartige Verfahren und Schutzvorrichtungen werden beispielsweise bei Anlagen wie sogenannten Funktionsprüffeldern, insbesondere Multifunktionsprüffeldern eingesetzt, sind aber im Grunde bei jeder Art von Maschine verwendbar, die beim Betrieb einen Gefahrenbereich ausbildet, der für Personen gesundheitsschädigend oder sogar lebensgefährlich sein kann. Diese Gefahr kann beispielsweise von schnellen oder mit großer Applikationskraft geführten, automatisierten Werkzeugen ausgehen, aber auch von Spannungsquellen der Maschine.

Bei Funktionsprüffeldern handelt es sich um eine automatisierte Prüfanordnung, die zur Qualitätsprüfung von Produkten eingesetzt werden. Eine oder mehrere Prüfmaschinen werden im Funktionsprüffeld installiert, um ein Produkt auf Dauerbelastung oder anderen Beanspruchungen, beispielsweise hinsichtlich der strukturellen oder materiellen Stabilität, zu testen. Bei einem Multlifunktionsprüffeld werden mehrere Funktionen eines Produktes oder Prüfungsgegenstandes getestet. Eine Prüfmaschine kann dabei eine bewegende Maschine sein, die mit der entsprechenden Analyseeinheit beispielsweise ein Abnutzungsverhalten oder eine Materialermüdung charakterisieren kann.

Als Beispiel eines Multifunktionsprüffeldes sei eine Möbeltestanlage genannt, die die typische Beanspruchung eines Stuhles simuliert. Dazu werden aktuierte Sitz- und Armlehnenstempel vielfach ein- und ausgefahren, um eine Sitzbelastung, wie bei einem sich setzenden oder sich vom Stuhl erhebenden menschlichen Körper entsteht, zu simulieren. Das Prüffeld kann gleichzeitig Daten über sich mit der Belastung ändernde Eigenschaften des Stuhles, beziehungsweise dessen Verschleiß messen, mit dem Ziel die Lebensdauer des Stuhles zu bestimmen und auch gegebenenfalls Stuhlkomponenten zu erkennen, die nach nur kurzer Nutzungsdauer versagt.

Für einen aussagekräftigen Produkttest muss das Funktionsprüffeld eine längere Zeit, wie zum Beispiel über Tage oder Wochen, betrieben werden. In dieser Zeit wird das Funktionsprüffeld nicht dauernd personell überwacht, weshalb, z.B. durch Schutzmaßnahmen, gewährleistet sein muss, dass keine Person in den Gefahrenbereich der Prüfmaschine gelangt. Aus der DE 10 2004 047 574 ist ein Schutzverfahren nach dem Oberbegriff des Anspruchs 1 bekannt.

Ein aus der DE 10 2005 003 492 A1 bekanntes Schutzverfahren bzw. eine Schutzmaßnahme basiert auf einer Kapazitätsänderung, die im oder vor dem Gefahrenbereich einer Maschine detektiert wird. Daran ist nachteilig, dass beispielsweise eine unkundige Person Gefahrenbereiche einer Maschine nicht erkennt oder auch eine kundige Person versehentlich in den Gefahrenbereich gerät und damit einen ungewollten Stillstand der Maschine verursacht. In beiden Fällen löst die jeweilige Person durch die eigene Annäherung an die Maschine eine kapazitive Änderung aus und damit auch eine Notabschaltung. Diese Unterbrechung kann in Abhängigkeit der Anwendung eine Wiederholung des gesamten Prüfvorgangs nötig machen. Zumindest wird die effektive Nutzungszeit der meist teuer zu betreibenden Maschine dadurch unnötigerweise reduziert.

In der vorgenannten Offenlegungsschrift werden auch andere Schutzmaßnahmen bzw. Sicherungssysteme genannt, die auf Lichtschranken, Laserscannern oder Kameras basieren. Jedoch haftet auch diesen Techniken der Makel an, dass aufgrund der fehlenden Sichtbarkeit des Gefahrenbereiches unnötige Maschinenstillstände provoziert werden.

Aus der DE 20 2005 005 273 U1 sind Verfahren bzw. Schutzvorrichtungen bekannt, die als Abdeckeinrichtungen Schutzfenster aufweisen, die in einem Führungsrahmen geführt sind und damit eine Zugriffsfläche freigeben oder abdecken. Die Schließposition der Fenster werden auf verschiedene Weisen sensiert, jedoch wird hierbei ein hoher Materialaufwand betrieben, indem aufwändige Schiebefenster hergestellt und verbaut werden, die zudem oft nicht genügend Raum für den manuellen Zugriff schaffen können, weil das Schiebefenster stets hinter eine feststehende Abdeckung geschoben werden muss. Bei Scharnierfenstern entsteht ebenfalls ein Platzproblem, weil ein gewisser Schwenkbereich zur Öffnung und Schließung des Schutzfensters notwendig ist und bei der Konstruktion oder Platzierung des Funktionsprüffeldes Berücksichtigung finden muss.

Aus der WO 97/35145 ist ein Verfahren unter Verwendung einer Schutzvorrichtung bekannt, die seitliche Führungsträger aufweist, die durch einen oberen Querträger verbunden sind. Im oberen Querträger ist eine Rollowelle mit einem flexiblen PVC-Rollo als Abdeckeinrichtung vorhanden. Am unteren Rolloende ist ein Kontaktschalter angeordnet, der bei heruntergezogenem Rollo einen Stromkreis zu einem Maschinenmotor schließt. Beim Hochheben des Rollos wird der Kontaktschalter gelöst und der Stromkreis zum Motor unterbrochen.

Zumindest ein unbeabsichtigtes Durchtreten oder Durchgreifen der Zugriffsfläche ist hier vermieden, da das Rollo von einer Person als solches wahrgenommen werden kann. Das Rollo bietet auch eine gewisse mechanische Barriere, um die Zugriffsfläche auch tatsächlich nicht zu durchtreten. Denkbar ist jedoch auch eine Situation, in der z.B. eine stürzende Person auf das flexible Rollo fällt und dieses nach innen zum Gefahrenbereich hin drückt bzw. verformt, ohne dass sich der Kontaktschalter löst. Eine Abschaltung der dahinterliegenden Maschine würde dann nicht erfolgen. Durch die Verformung erfolgt dennoch ein Eindringen in den Gefahrenbereich, so dass z.B. ein bewegtes Maschinenteil so die Person, die das Rollo eindrückt immer noch verletzen könnte.

Die Aufgabe der Erfindung besteht darin, ein Verfahren und eine Schutzvorrichtung, insbesondere für Anlagen mit Gefahrenbereich, anzugeben, das vor allem hinsichtlich des Personenschutzes oder der effektiven Nutzungsdauer der Maschine verbessert ist. Ebenso soll eine entsprechend verbesserte Anlage angegeben werden.

Hinsichtlich des Verfahrens wird die Aufgabe gelöst durch ein Verfahren nach Anspruch 1. Bei dem Verfahren zur Überwachung eines Zutritts oder Zugriffs durch eine Zugriffsfläche, wird eine Abdeckeinrichtung zwischen einer eine Zugriffsfläche freigebenden Zugriffsposition und einer die Zugriffsfläche abdeckenden Abdeckposition bewegt. In der Abdeckposition wird ein Fixierabschnitt der Abdeckeinrichtung im Bereich eines Randabschnitts der Zugriffsfläche lösbar fixiert. Die Fixierung des Fixierabschnitts wird überwacht. Erfindungsgemäß wird außerdem eine Relativbewegung eines vom Fixierabschnitt verschiedenen Überwachungsabschnitts der Abdeckeinrichtung relativ zum Fixierabschnitt überwacht. Ein Freigabesignal wird nur dann erzeugt, wenn gemäß der Überwachungen sowohl die Fixierung des Fixierabschnitts als auch keine Relativbewegung des Überwachungsabschnitts, also dessen Ruhen bezüglich des Fixierungsabschnitts, erkannt wird. Es erfolgen also die beiden oben genannten Überwachungen. Außerdem erfolgt eine UND-Verknüpfung beider Ergebnisse der Überwachungen, gemäß der das Freigabesignal nur erzeugt wird, wenn beide Ergebnisse den jeweils sicheren Zustand (Fixierung und Ruhen) signalisieren.

Erfindungsgemäß wird also nicht etwa nur eine Endposition der Abdeckeinrichtung in Form des fixierten Fixierabschnitts überwacht, sondern zusätzlich deren Bewegung, beziehungsweise deren Stillstand relativ zu einer Fixposition, nämlich dem fixierten Fixierabschnitt. Die Bewegung bzw. Stillstand wird anhand eines anderen Abschnitts der Abdeckeinrichtung, nämlich des Überwachungsabschnitts ermittelt. Dabei wird vorausgesetzt, dass in der ursprünglichen Abdeckposition - ohne zusätzliche Bewegung des Abdeckelements - der Gefahrenbereich ausreichend abgedeckt ist. Diese Überprüfung kann maschinell, zum Beispiel durch einen Fixierungssensor, aber alternativ auch durch den Experimentator oder Prüfer geschehen. Dieser könnte beispielsweise durch das Starten der Maschine, insbesondere Prüfmaschine, z.B. einer zugehörigen Auswerteinheit signalisieren, dass der Gefahrenbereich abgedeckt und somit sicher ist. Von nun an ist die Maschine in Betrieb und die Abdeckeinrichtung wird auf eine Bewegung hin überwacht, wie sie z.B. entsteht, wenn eine Person die Abdeckeinrichtung unvorhergesehen bewegt oder aus der Fixierung löst. So lange das nicht geschieht, liegt das Freigabesignal vor. Bei Bewegung des Abdeckelements fällt das Signal ab. Daher kann es z.B. für eine Notabschaltung, ein Warnsignal, eine Betriebsüberwachung o.ä. eingesetzt werden.

Das Verfahren kann insbesondere unter Verwendung der nachfolgend erläuterten erfindungsgemäßen Vorrichtung durchgeführt werden. Das Verfahren sowie dessen vorteilhafte Ausführungsformen werden sinngemäß im Zusammenhang mit der Schutzvorrichtung erläutert. Vorteilhafte Weiterbildungen des Verfahrens ergeben sich sinngemäß unter Verwendung der Ausführungsformen der Vorrichtung.

Die Aufgabe wird hinsichtlich der Schutzvorrichtung durch eine solche gemäß Patentanspruch 1 gelöst. Die Schutzvorrichtung enthält eine Abdeckeinrichtung, die zwischen einer eine Zugriffsfläche freigebenden Zugriffsposition und einer die Zugriffsfläche abdeckenden Abdeckposition bewegbar ist. In der Abdeckposition ist ein Fixierabschnitt der Abdeckeinrichtung im Bereich eines Randabschnitts der Zugriffsfläche lösbar fixiert. Die Schutzvorrichtung enthält einen Fixierungssensor zur Überwachung der Fixierung des Fixierabschnitts. Der Fixierungssensor ist derart ausgebildet, dass an seinem Ausgang nur bei vorhandener Fixierung ein Fixiersignal anliegt.

Erfindungsgemäß enthält die Vorrichtung außerdem einen Bewegungssensor. Dieser dient zur Überwachung einer Relativbewegung, die ein vom Fixierabschnitt verschiedener Überwachungsabschnitt der Abdeckeinrichtung relativ zum Fixierabschnitt ausführt. Der Bewegungssensor ist derart ausgebildet, dass an seinem Ausgang nur bei fehlender Relativbewegung ein Ruhesignal anliegt. Die Vorrichtung enthält außerdem eine Auswerteeinrichtung. Diese ist derart ausgebildet, dass an deren Ausgang ein Freigabesignal nur dann anliegt, wenn das Fixiersignal am Ausgang des Fixierungssensors und das Ruhesignal am Ausgang des Bewegungssensors anliegen.

Durch den Bewegungssensor wird also nicht etwa eine Endposition der Abdeckeinrichtung überwacht, sondern deren Bewegung, beziehungsweise deren Stillstand zu einer Fixposition, nämlich dem fixierten Fixierabschnitt. Der Bewegungssensor wird dazu nach dem ordnungsgemäßen Schließen der Abdeckeinrichtung aktiviert. Dabei wird vorausgesetzt, dass bei einem ordnungsgemäßen Schließen der Gefahrenbereich abgedeckt ist. Diese Überprüfung kann maschinell, zum Beispiel durch den Fixierungssensor, aber alternativ auch durch den Experimentator oder Prüfer geschehen. Dieser könnte beispielsweise durch das Starten der Maschine, insbesondere Prüfmaschine, der zugehörigen Auswerteinheit im Sinne eines Fixiersignals signalisieren, dass der Gefahrenbereich abgedeckt und somit sicher ist. Von nun an ist die Maschine in Betrieb und die Abdeckeinrichtung wird vom Bewegungssensor auf eine Bewegung hin überwacht, wie sie z.B. entsteht, wenn eine Person die Abdeckeinrichtung unvorhergesehen bewegt.

Es nicht zwingend erforderlich, dass die Abdeckeinrichtung zwischen Zugriffs- und Abdeckposition von oben nach unten bewegt wird. Dies ist ebenso von links nach rechts oder in der Horizontalen möglich. Damit kommen auch Zugriffsflächen in Frage, die nach oben oder unten offen sind. Dazu muss das Material und die Materialdicke der Abdeckeinrichtung an die Angriffsrichtung der Schwerkraft angepasst werden, was aber z.B. bei einem geringen Gewicht einer Rolloplane nicht kritisch ist.

Unter einer Bewegung des Überwachungsabschnitts kann eine Rotation oder Translation zumindest eines Teilstückes der Abdeckeinrichtung gemeint sein, aber auch eine elastische Beanspruchung in Form einer Dehnung oder Straffung, die nur lokal oder an der gesamten Abdeckeinrichtung auftreten kann. Der Überwachungsabschnitt kann also nur einen tatsächlichen Teil, aber auch den gesamten restlichen Bereich der Abdeckeinrichtung (ausgenommen den Fixierabschnitt) umfassen. Der Erfassungsbereich ist je nach Anwendungsfall so gewählt, dass zumindest bei zu überwachenden unzulässigen Kontakten einer Person etc. mit der Abdeckeinrichtung eine Bewegung des Überwachungsabschnitts erfolgt. Bei der rotativen Detektion ist der Bewegungssensor z.B. einfach in einen Auf- beziehungsweise Abrollmechanismus für ein Rollo integrierbar und kann zusammen mit dem Rollo installiert werden. Die lineare Detektion erfordert meist weniger Bauteile.

Gemäß der Erfindung wird ein Ruhesignal zur Verfügung gestellt, das bei Vorhandensein anzeigt, dass sich die Abdeckeinrichtung im Erfassungsbereich in Ruhe zum fixierten Fixierabschnitt befindet. Wird - ohne den Fixierabschnitt aus der Fixierung zu lösen - die Abdeckeinrichtung bewegt, z.B. durch eine die Abdeckeinrichtung verformend eindrückende Person, findet eine Relativbewegung des Überwachungsabschnitts zum Fixierabschnitt statt. Diese wird vom Bewegungssensor erkannt, das Ruhesignal fällt ab und damit auch das Freigabesignal. All dies erfolgt, obwohl der Fixierungssensor weiterhin eine gültige Fixierung des Fixierabschnitts der Abdeckeinrichtung anzeigt, d.h. das Fixiersignal ausgibt. Das Freigabesignal kann dann in bekannter bzw. beliebiger Weise z.B. für eine Notabschaltung einer Maschine, das Auslösen eines Alarms usw. verwendet werden. Der Personenschutz ist dadurch verbessert. Die Schutzvorrichtung ist dennoch platzsparend, da flächig ausgeführt, und kann z.B. direkt vor dem Gefahrenbereich platziert werden. Ein zusätzlicher Sicherheitsabstand der Abdeckeinrichtung zu einem Gefahrenbereich ist z.B. nicht notwendig.

Die erwähnten Signale sind im logischen Sinne zu verstehen: Gemeint ist die Anwesenheit oder Abwesenheit oder unterschiedliche Signalformen eines elektrischen Schaltsignals, das durch seinen Charakter die vorhandene/nicht vorhandene Fixierung oder Bewegung anzeigt. Insbesondere ergibt sich beim Fixierungssensor so ein Endlagenschalter.

Das Freigabesignal ist z.B. über wenigstens eine Signalleitung mit einer Steuereinheit verbunden. So kann seitens der Steuereinheit erkannt werden, ob sich die Abdeckeinrichtung tatsächlich in der Abdeckposition befindet und ein manueller Zugriff auf eine hinter der Durchtrittsöffnung platzierte Maschine ausgeschlossen ist. Die Maschine kann dann sicher betrieben werden.

Die Erfindung verbindet den Vorteil, dass für die Abdeckeinrichtung ein leicht handhabbares, kostengünstiges und flexibles Material benutzt werden kann, mit dem weiteren Vorteil, dass dennoch ein unerwünschtes Durchdringen der Zugriffsfläche durch Verformung der Abdeckeinrichtung wirksam erkannt wird, indem das Ruhesignal und damit das Freigabesignal abfällt. Der bekannte Schutz bei Öffnen der Abdeckeinrichtung ist außerdem zusätzlich gegeben, da dieser durch den Fixierungssensor in bekannter Weise übernommen wird, wenn der Fixierabschnitt der Abdeckeinrichtung aus der Fixierung gelöst wird. Auch dann fällt das Freigabesignal ab, da das Fixiersignal abfällt.

Der Bewegungssensor im Zusammenwirken mit dem Abdeckeinrichtung bzw. Überwachungsabschnitt wird dabei in der Regel derart ausgelegt, dass erlaubte bzw. kleinere Bewegungen des Überwachungsabschnitts, die z.B. durch Luftbewegung verursacht werden, als Bewegung undetektiert bleiben.

Die verwendeten Sensoren sind in der Regel als handelsübliche manipulationssichere Sensoren ausgeführt, um eine einfache Deaktivierung durch Bedienpersonal (Verkleben, Nutzung von Kaugummis, Einklemmen von Werkzeugen) zu verhindern.

In einer bevorzugten Ausführungsform ist die Abdeckeinrichtung als rollbare oder faltbare Rolloplane ausgebildet, wobei die Rolloplane durch Abrollen beziehungsweise durch Entfalten von der Zugriffsposition in die Abdeckposition bewegbar ist. Der Fixierabschnitt der Abdeckeinrichtung ist dann insbesondere das vordere, also ausziehbares Ende der Rolloplane. Insbesondere ist das Rollo dann mit einem Federzug ausgerüstet. So kann es selbsttätig aufrollen und gegen den Federzug händisch abgerollt werden. Dabei wird die flächige Eigenschaft der Rolloplane ideal ausgenutzt, um einerseits trotz eines geringen Materialaufwandes eine großflächige Abdeckung zu erzielen, aber auch, um auf kleinstem Raum in mehreren Lagen auf sich selbst aufzuliegen zu können. Vorteilhafterweise ist eine rollbare Rolloplane auf eine an einem Rahmen befestigte, drehbare Achse aufrollbar beziehungsweise von dieser abrollbar. Die Rolloplane ist endseitig an der Achse befestigt, um sich bei deren Drehung um diese herumwickeln zu können (Aufrollen), wobei das andere, handhabbare Ende - als Fixierabschnitt - gezogen wird, um die Zugriffsfläche nach und nach abzudecken.

Bei einer vorteilhaften Ausführungsform ist die Rolloplane an der Achse mittels eines Federzuges oder eines Bandes, insbesondere Gurtbandes, befestigt. Dadurch ist der Halt auch bei einer größeren Beanspruchung gewährleistet. Wird beispielsweise die in Abdeckposition befindliche Rolloplane von außen in das Innere des Rahmens gedrückt, muss der Halt an der Achse in jedem Fall gewährleistet sein und der angreifenden Kraft besser standhalten, als ein Rückhaltemechanismus, der die Rolloplane am handhabbaren Ende (den Fixierabschnitt) in der Fixierposition hält. Findet also eine derartige Belastung statt wird der erwähnte Rückhaltemechanismus die Rolloplane aus ihrer Abdeckposition zuerst freigeben und gegebenenfalls eine Notabschaltung auslösen. Ein Federzug hat noch den zusätzlichen Vorteil, dass aufgrund der zur Verfügung gestellten Aufrollkraft nur für das Abdecken des Fensters eine manuelle Kraft aufgewendet werden muss, nicht aber für das Abdecken. Dabei muss gewährleistet sein, dass die Aufrollkraft alleine nicht in der Lage ist den Rückhaltemechanismus zu überwinden. Kurzum ist es also von Vorteil, wenn die Rolloplane derart mit einer Aufrollkraft beaufschlagt ist, dass die Rolloplane selbsttätig einrollbar ist und das Abrollen der Rolloplane durch manuelle Überwindung der Aufrollkraft ausgeführt werden kann.

Die erfindungsgemäße Abdeckeinrichtung kann als Faltrollo ausgeführt sein, welches bei der Freigabe der Zugriffsfläche zusammengefaltet wird. Dabei wird ein vorgegebenes Faltmuster verwendet, welches Positionierung der Falze und ihre Anordnung zueinander vorgibt. Im gefalteten Zustand ist die Zugriffsfläche ohne Abdeckung und im entfalteten Zustand wird sie von der Rolloplane abgedeckt.

Vorteilhafterweise weist die faltbare Abdeckeinrichtung eine Mehrzahl von parallel zueinander angeordneten Falzen auf. Damit würde das sogenannte Ziehharmonika-Prinzip umgesetzt, um ein sehr bauteilarmes und damit kostengünstiges Abdeckeinrichtung zu ermöglichen. Dazu ist lediglich ein mehrfach gefalztes Abdeckeinrichtung notwendig und eine Leine oder Schnur, die derart durch die Abdeckeinrichtung gefädelt ist, dass eine Zusammenfaltung der Abdeckeinrichtung, gegebenenfalls entgegen deren Elastizitätskraft ermöglicht wird.

Vorteilhafterweise ist die Auswerteeinrichtung zur Generierung eines Freigabesignals bei unbewegter Rolloplane und/oder zur Generierung eines Signals zur Einleitung einer Schutzmaßnahme, insbesondere einer Notabschaltung, bei bewegter Rolloplane vorgesehen. Aus Sicherheitsgründen ist die ständige Abgabe eines Freigabesignals vorteilhafter, weil auch ein Ausfall des Bewegungssensors z.B. durch eine Steuereinheit erkennbar ist. Zur vollständigen Überwachung können auch beide Signale, insbesondere elektrische Signale, verwendet werden.

Eine vorhandene Anlage, z.B. ein Funktionsprüffeld, insbesondere Multifunktionsprüffeld, mit wenigstens einer Prüfmaschine mit Gefahrenbereich, wobei der Gefahrenbereich durch die Abdeckeinrichtung abdeckbar ist, ließe sich sehr einfach mit einer erfindungsgemäßen Schutzvorrichtung ausrüsten. Diese müsste nur, beispielweise an einem Rahmen des Prüffeldes, befestigt und die Auswerteeinrichtung mit einer Steuereinheit der Anlage verbunden werden, um einsatzbereit zu sein.

Dank der beiden Sensoren wird ein hoher Überwachungsgrad erreicht, der in Abhängigkeit der Sicherheitsanforderungen gewählt werden kann. Dabei können Sicherungsmaßnahmen, insbesondere eine Sicherungsabschaltung einer zu überwachenden Maschine eingeleitet werden. Die Unabhängigkeit beider Sicherungssysteme - Fixierungssensor und Bewegungssensor - trägt zu einem höheren Sicherheitsgrad bei. Die Generierung einer Sicherungsmaßnahme ist ebenfalls denkbar, falls das Versagen eines der beiden Sensoren als wahrscheinlich erachtet wird.

Bevorzugt erzeugt die Auswerteeinrichtung nur ein Freigabesignal, wenn alle erforderlichen internen Freigabesignale der Vorrichtung (Fixiersignal, Ruhesignal, weitere Signale sonstiger Sicherheitssensoren) der in der Schutzvorrichtung verwendeten Sensoren vorliegen, die einen sicheren Zustand der Vorrichtung sensieren.

Gemäß einer Weiterbildung der Erfindung ist der Fixierabschnitt ein solches Ende der Abdeckeinrichtung, das bei einer Bewegung der Abdeckeinrichtung von der Zugriffsposition zur Abdeckposition ein vorderes Ende darstellt. Das vordere Ende wird dabei insbesondere entlang d.h. parallel zur Zugriffsfläche und insbesondere linear bewegt. Das vordere Ende lässt sich dann besonders leicht fixieren, z.B. in einer hierfür geschaffenen Aufnahme. Der Fixierungssensor lässt sich mit einer derartigen Aufnahme dann auch leicht kombinieren.

In einer weiteren Ausführungsform ist die Abdeckeinrichtung in der Abdeckposition in Richtung zur Zugriffsposition hin mit einer Zugkraft belastet, mit anderen Worten also auf Zug gehalten bzw. gespannt. Dies bietet sich insbesondere für flexible Abdeckeinrichtungen, z.B. Planen, Folien oder Gewebe an. Die Abdeckeinrichtung ist dann gegen eine Zugkraft von der Zugriffsposition in die Abdeckposition bewegbar. Insbesondere kann so eine händische Betätigung der Abdeckeinrichtung erfolgen. Diese Ausführungsform bietet einen Doppelnutzen, da sich einerseits beim Lösen aus der Fixierung die Abdeckeinrichtung selbständig von der Abdeckposition in die Zugriffsposition zurückzieht. Andererseits ist die Abdeckeinrichtung durch die Zugkraft bzw. die Spannung gegen kleinere unerwünschte Relativbewegungen geschützt, wie sie z.B. durch Luftzug entstehen könnten. Bei einem ungespannten Abdeckeinrichtung könnte schon ein sicherheitsirrelevanter Luftzug eine Relativbewegung verursachen und das Freigabesignal unerwünschterweise fallen.

In einer weiteren Ausführungsform enthält der Fixierungssensor einen zur Zugriffsfläche ortsfixierten Geber, z.B. in Form einer Buchse oder eines Transmitters, und einen zum Fixierabschnitt ortsfixierten Kontakt, z.B. einen zur Buchse passenden Stecker oder eine zum Transmitter passende Ködierplatte. Nur bei Fixierung des Fixierabschnitts steht der Kontakt in Wechselwirkung oder Eingriffsverbindung mit dem Geber. Das Fixiersignal liegt nur an, wenn Kontakt und Geber in Wechselwirkung oder Eingriffsverbindung stehen. Kontakt und Geber können auch umgekehrt montiert werden, d.h. der Geber am Abdeckeinrichtung usw. Ein derartiger zweiteiliger Sensor ist hier besonders geeignet, da je ein Teil an der Abdeckeinrichtung und der andere Teil ortsfest montiert werden kann.

Bei einer vorteilhaften Ausführungsform ist als Fixierungssensor an dem handhabbaren Ende der Abdeckeinrichtung ein Kontaktstecker befestigt, der in der Abdeckposition der Rolloplane in Wechselwirkung bzw. Eingriffsverbindung mit dem Sensor, insbesondere einem Endlagenschalter, tritt. Der Kontaktstecker ist fest mit dem ausziehbaren Ende der Abdeckeinrichtung verbunden, beispielsweise über eine Griffleiste, die zur besseren Handhabe des ausziehbaren Endes dient.

In einer bevorzugten Ausführungsform enthält die Schutzvorrichtung einen Rahmen, wobei die die Zugriffsfläche vom Rahmen umgeben ist. Die Vorrichtung bildet damit ein Sicherheitstor oder Sicherheitsfenster. Der Rahmen kann dabei größer als die Zugriffsfläche sein, so dass in der Abdeckposition Bereiche der vom Rahmen umgrenzten Öffnung, die nicht zur Zugriffsfläche gehören, nicht von der Abdeckeinrichtung abgedeckt sind. Die verbleibenden Bereiche sind z.B. nur unkritische Bereiche, bei denen ein Durchtritt nicht überwacht werden muss. Hier kann z.B. der o.g. Geber des zweiteiligen Fixierungssensors am Rahmen installiert werden, da dieser relativ zur Zugriffsfläche ruht. Mit anderen Worten umgibt bzw. umgrenzt der Rahmen die Zugriffsfläche.

Der Rahmen wird als Grundstruktur verstanden, die eine Halterung zur Sicherung eines Gefahrenbereiches darstellt. Am Rahmen können auch verschiedene und/oder mehrere Abdeckungen vorhanden sein, der Rahmen also mehrere Durchtrittsöffnungen bilden. Der Rahmen kann hierfür teilweise oder ganz aus Pfosten und zwischen den Pfosten angeordneten Querstreben gebildet werden, die in Ihrer Gesamtheit idealerweise einen geometrischen Körper, wie zum Beispiel eine Würfelform oder eine Quaderform bilden. Alternativ kann der gebildete Körper auch aus mehreren der genannten Formen zusammengesetzt sein.

Unter einem Fenster werden die Öffnungen des Rahmens verstanden, die von den Bestandteilen des Rahmens begrenzt werden und an sich einen manuellen Zugriff durch den Rahmen bzw. in das Innere des Rahmens zulassen. Die von Abdeckeinrichtungen verdeckbaren Fenster oder Teile der Fenster sind die abdeckbaren Zugriffsflächen. Damit hätte ein quaderförmiger Rahmen sechs Fenster, die es gilt entweder permanent (nicht zur Öffnung vorgesehen) abzudecken oder öffenbar mit Abdeckeinrichtungen abzudecken. Als permanente Abdeckung kommen beispielsweise Metallplatten oder Plexiglasplatten in Frage, je nachdem, ob die Sicht in das Innere des Rahmens ermöglicht werden soll oder nicht. Insbesondere sind die Abdeckeinrichtungen, z.B. in Form von Rollos, in oder an den Fenstern des Rahmens befestigt. Eine Anordnung des Rollos im Fenster bedeutet, dass das Rollo zumindest teilweise von den das Fenster bildenden Pfosten und Streben umfasst wird. Alternativ kann das Rollo auch an einer Außenseite eines solchen Pfostens oder einer solchen Strebe befestigt sein.

Bei einem geschlossenen Rahmen ist ein manueller Zugriff durch wenigstens ein solches Fenster hindurch auf wenigstens eine innerhalb der Schutzvorrichtung anordenbare Maschine mit einem Gefahrenbereich, insbesondere Prüfmaschine, vorgesehen. Unter manuellem Zugriff wird eine Interaktion eines Installateurs oder Experimentators mit der Prüfmaschine verstanden, etwa bei deren Aufbau, beim Einsetzen des zu prüfenden Produktes oder bei einer Reparatur, die von außerhalb des Rahmens durch ein abdeckbares Fenster hindurch zu erfolgen hat und nach dem Zugriff wieder abgedeckt wird. Dabei kann es eine Mehrzahl von abdeckbaren Fenstern geben, die durch die Komplexität der Maschine bestimmt werden sollte.

Z.B. bei einer Prüfmaschine wird die Funktionsprüfung selbst idealerweise durch eine Steuereinheit kontrolliert, die außerhalb des Rahmens oder außen am Rahmen angeordnet ist. Während der Prüfung sind alle abdeckbaren Fenster abgedeckt, die Auswerteeinrichtungen der betreffenden Schutzvorrichtungen liefern dann die Freigabesignale.

Werden z.B. alle Abdeckpositionen der bewegbaren Abdeckeinrichtungen aller abdeckbaren Fenster durch die jeweiligen Sensoren erkannt, sendet jeder Sensor ein Freigabesignal an eine zentrale Steuerung. Liegen alle Freigabesignale vor, so ist der Personenschutz beim Betrieb der Maschine gewährleistet.

Vorteilhafterweise ist die Abdeckeinrichtung in einer zweiten Führungsnut des Rahmens führbar. Bei großen Rahmen und somit sehr langen Abdeckeinrichtungen könnte die Möglichkeit gegeben sein, dass eine Person eine Hand zwischen ein Abdeckeinrichtung und den angrenzenden Pfosten oder Strebe bringen kann, ohne die Abdeckposition der Abdeckeinrichtung zu tangieren. Dies müsste sie zwar in dem Bewusstsein tun, dass die Hand in einen Gefahrenbereich eindringt - womit also die Erkennung des Gefahrenbereiches bereits gewährleistet wäre - aber diese zusätzliche Absicherung könnte im jeweiligen Anwendungsfall gefragt sein. Im Falle eines Rollos ist bei einer vorteilhaften Ausführungsform die Halterung des Rollos, d.h. insbesondere dessen Welle, in einer ersten Befestigungsnut des Rahmens befestigt, wie sie beispielsweise sogenannte Aluminiumprofile bereitstellen, die als Pfosten und Streben eines Rahmens verwendbar sind.

In einer weiteren Ausführungsform ist der Bewegungssensor relativ zum sich in der Abdeckposition befindlichen Fixierabschnitt ortsfixiert, und ein Erfassungsbereich des Bewegungssensors ist auf den Überwachungsabschnitt ausgerichtet. Hierdurch kann eine unmittelbare Überwachung der Abdeckeinrichtung auf Bewegung erfolgen, insbesondere z.B. durch einen herkömmlichen berührungslosen Bewegungssensor, dessen den Erfassungsbereich darstellender Erfassungskegel auf den Überwachungsabschnitt ausgerichtet ist. Mit anderen Worten fungiert hier die Abdeckeinrichtung selbst als Signalgeber des Bewegungssensors, womit die Bewegung der Abdeckeinrichtung unmittelbar durch den Bewegungssensor detektierbar ist.

Bei einer weiteren Ausführungsform ist im Überwachungsabschnitt ein mit dem Bewegungssensor wechselwirkender Marker am Abdeckeinrichtung fixiert, und am Ausgang des Bewegungssensors liegt das Ruhesignal nur an, wenn keine Relativbewegung des Markers zum Bewegungssensor erfolgt. Der Marker kann hierbei z.B. alleine durch eine Oberflächenstruktur der Plane gegeben sein, aber auch als optischer, magnetischer oder Funk-Marker für entsprechend arbeitende Bewegungssensoren ausgebildet sein.

Bevorzugt ist der Bewegungssensor aus einer Lichtquelle, insbesondere einer Licht emittierenden Diode, und einem Lichtdetektor gebildet. Eine derartige Anordnung kann durch eine sogenannte Lichtschranke realisiert werden. Dabei sind die Lichtquelle und der Lichtdetektor in einer Transmissionsanordnung oder einer Reflektionsanordnung in Bezug zum Abdeckeinrichtung angeordnet.

Bei der Transmissionsanordnung detektiert der Lichtdetektor den Lichtstrahl, der durch den Signalgeber, hier die Abdeckeinrichtung selbst, hindurchgeht. Der Signalgeber tritt bei Bewegung mit dem Lichtstrahl in Wechselwirkung und ändert diesen in irgendeiner, detektierbaren Art und Weise ab. Am einfachsten ist es, wenn die Intensität des Lichtstrahles durch eine Bewegung moduliert wird, wie zum Beispiel durch eine Schlitzreihe, die bei Bewegung den Lichtstrahl alternierend absorbiert und wieder transmittiert. Der Lichtdetektor liefert ein stark schwankendes Signal, welches den Rückschluss auf eine Bewegung der Abdeckeinrichtung zulässt und das Ruhesignal unterbricht, beziehungsweise eine Bewegung anzeigt. Bei Transmissionsanordnungen sind folglich sogenannte Gabellichtschranken vorteilhaft einsetzbar, weil diese den optischen Signalgeber umfassen können.

Alternativ kann eine Reflektionsanordung gewählt werden, bei der die Reflexion des Signalgebers im Lichtdetektor detektiert wird. Hierbei ist es nicht notwendig die Abdeckeinrichtung mit Schlitzen zu versehen, sondern es kann eine alternierende Folge von reflektierenden und absorbierenden Flächen, beispielsweise mittels eines Klebestreifens, auf den Signalgeber, insbesondere die Abdeckeinrichtung, aufgebracht werden.

In einer Variante dieser Ausführungsform weist die Abdeckeinrichtung, eine Perforierung auf - z.B. bei einem Rollo in Rollrichtung verlaufend - wobei die Perforierung dazu vorgesehen ist mit einem Lichtstrahl zwischen Lichtquelle und Lichtdetektor eines Bewegungssensors in Abhängigkeit verschiedener Bewegungszustände der Abdeckeinrichtung jeweils unterschiedlich wechselzuwirken. Hierbei kann es sich beim Signalgeber beispielsweise um einen Diffusor handeln, der den Lichtstrahl der Lichtquelle unterschiedlich, also in Abhängigkeit der Bewegungsposition, streuen kann, sodass vom Lichtdetektor einmal ein größerer oder kleinerer Teil des Streukegels aufgefangen und detektiert werden kann, womit effektiv eine Intensitätsmodulation stattfindet.

Bevorzugt weist die Perforierung der Abdeckeinrichtung Mittel zur Reflektion, insbesondere reflektierende Flächen, Mittel zur Diffusion, insbesondere Lichtstrahl aufweitende Strukturen, Mittel zur Beugung, insbesondere linsenartige Strukturen, Mittel zur Absorption, insbesondere schwarze Flächen, und/oder Mittel zur Transmission, insbesondere eine Lochreihe oder Schlitzreihe, auf. Grundsätzliches Ziel ist es, den Lichtstahl in irgendeiner detektierbaren Art und Weise bei Bewegung der Abdeckeinrichtung zu ändern.

Bei einer weiteren Ausführungsform weist der Bewegungssensor eine Magnetspule und die Abdeckeinrichtung als Marker Mittel zur Änderung einer Magnetflussdichte, insbesondere Metallstreifen, auf. Die Mittel zur Änderung der Magnetflussdichte bilden zumindest teilweise oder auch ganz den Signalgeber des Bewegungssensors aus. Der erwähnte Metallsreifen könnte eine Reihe von abwechselnden Metallzähnen und Zahnzwischenräumen aufweisen, die an der sentierenden Magnetspule vorbeilaufen und in dieser einen messbaren, elektrischen Strom induzieren. Alternativ ist dies auch mit einem als Encoder ausgeführten Signalgeber möglich, der alternierende Nord- und Südpole aufweist, und auf der Basis eines magnetischen oder magnetisierbaren Materials hergestellt ist.

In einer alternativen Ausführungsform ist die Abdeckeinrichtung derart mit einem beweglichen Kontrollelement bewegungsgekoppelt, dass eine Relativbewegung des Überwachungsabschnitts eine Bewegung des Kontrollelements bewirkt, und der Bewegungssensor zur Überwachung der Bewegung des Kontrollelements ausgebildet ist, wobei am Ausgang des Bewegungssensors das Ruhesignal nur bei fehlender Bewegung anliegt. So ergibt sich im Gegensatz zu oben nur eine mittelbare Überwachung der Bewegung der Abdeckeinrichtung. Z.B. bei einem Rollo ist die Abdeckeinrichtung in Form der Rolloplane auf einer Achse aufgewickelt. Das Kontrollelement ist dann z.B. die Achse oder ein Speichenrad oder ein anderes mit der Rolloplane bewegungsgekoppeltes Bauteil, das als Signalgeber für den Bewegungssensor fungiert.

Vorteilhafterweise fungiert eine Achse, ein Speichenrad oder ein anderes mit der Abdeckeinrichtung bewegbar verbundenes Bauteil als Kontrollelement, insbesondere als Signalgeber für o.g. Ausführungsformen von Bewegungssensoren, die somit hier auch verwendbar sind. So erfolgt eine indirekte, mittelbare Detektion, das Kontrollelement kann an einer beliebigen Stelle angebracht werden, das Material der Abdeckeinrichtung muss sich nicht für das o.g. unmittelbare Detektorverfahren eigen und ist damit nicht festgelegt. Es kann sich außerdem bauraumsparend auswirken, wenn der Bewegungssensor mittelbar arbeitet. So kann er z.B. unter einer Rolloabdeckung angebracht sein. Von der Bewegung des Kontrollelements muss eindeutig auf eine Bewegung der Rolloplane geschlossen werden können.

In einer bevorzugten Variante der Erfindung ist das Kontrollelement ein sich bei einer Relativbewegung des Überwachungsabschnitts bewegendes Führungsmittel der Abdeckeinrichtung. Da die Führungsmittel der Abdeckeinrichtung in der Regel ebenfalls bei dessen Bewegung bewegt werden, z.B. ein vom Rollo mitbewegtes Speichenrad, weisen diese automatisch die geforderte Eigenschaft eines Kontrollelements auf. Andere Rollobauteile sind ebenfalls denkbar.

In einer weiteren Ausführungsform ist das Führungsmittel eine drehbare Welle, von der die Abdeckeinrichtung bei Bewegung von der Zugriffsposition in die Abdeckposition abrollbar ist, und der Bewegungssensor zur Überwachung der Rotation der Welle ausgebildet ist. Die Rotation stellt dann die zu detektierende Bewegung dar. Hier sei besonders eine Rollowelle genannt.

Bei einer weiteren Ausführungsform enthält der Bewegungssensor einen mit der Welle bewegungsgekoppelten Winkellagegeber zur Überwachung einer Rotation bzw. Winkeländerung der Welle, wobei das Ruhesignal am Ausgang des Bewegungssensors nur bei Fehlen der Rotation anliegt. Derartige Winkellage- oder Drehgeber sind als Standardbauteil, z.B. in Form von Inkrementalgebern, kostengünstig verfügbar.

In einer bevorzugten Variante enthält der Winkellagegeber ein mit der Welle bewegungsgekoppeltes zahnradartiges Strukturteil und ein dessen Zähne und Zahnlücken detektierendes Sensorelement. Bei Bewegung wandern abwechselnd Zähne und Zahnlücken am Sensorelement vorbei. Am Ausgang des Bewegungssensors das Ruhesignal nur anliegt, wenn im Sensorelement kein Wechseln zwischen Detektionen eines Zahnes und einer Zahnlücke vorliegt.

Das Strukturteil kann nach Art eines Kronenrades oder des wellenseitigen Teils einer Zahnkupplung ausgeführt sein. Auch ist eine Nabe mit sich axial entlang der Welle erstreckenden Fingern denkbar. Die Zähne sind ganz allgemein z.B. zinnenartige Strukturen, die von den Lücken durch den Sensor zu unterscheiden sind. Ein Signalwechsel erfolgt z.B. dann nicht, wenn ein Zahn oder eine Zahnlücke für eine Mindestdauer erkannt werden. Entscheidend ist, dass das Ruhesignal bei einem Flankenwechsel sofort beendet wird. Das Sensorelement kann z.B. optisch oder als Näherungssensor usw. arbeiten. Die Zahn- und Lückengeometrie ist insbesondere auf die Schutzvorrichtung angepasst, so dass sich eine gewünschte Auslöseempfindlichkeit für den Bewegungssensor ergibt.

Vorteilhafterweise besteht die Abdeckeinrichtung zumindest teilweise oder vollständig aus Kunststoff, insbesondere Polyvinylchlorid (PVC). Auch andere thermoplastische Kunststoffe kommen in Frage, die kostengünstig und in sehr dünnen Planen herstellbar sind, um möglichst viel Platz einzusparen.

Vorteilhafterweise ist die Abdeckeinrichtung durchsichtig, teilweise durchsichtig, getönt oder teilweise getönt. Somit bleibt z.B. eine zu schützende Maschine durch die Durchtrittsöffnung bei geschlossener Abdeckeinrichtung von außen sichtbar, sodass z.B. der Verlauf einer Prüfung visuell überprüft werden kann. Dazu können Teile der Abdeckeinrichtung, die den Blick auf unrelevante Teile der Maschine zulassen, auch undurchsichtig gestaltet oder zumindest abgetönt werden.

Idealerweise ist die Auswerteeinrichtung der Vorrichtung oder auch eine externe, einer zu überwachenden Maschine zugeordnete Steuereinheit dazu vorgesehen während des Empfangs aller erforderlichen Freigabesignale die Maschine zu betreiben und bei Wegfall wenigstens eines Freigabesignals eine Sicherungsmaßnahme, insbesondere eine Notabschaltung, einzuleiten. Dabei ist nicht unbedingt erforderlich, dass die Freigabesignale alle von der Schutzvorrichtung stammen oder von Sensoren, die eine Abdeckposition einer Abdeckeinrichtung überwachen.

Hinsichtlich der Anlage wird die Aufgabe der Erfindung gelöst durch eine Anlage nach Anspruch 13, mit einer oben beschriebenen Schutzvorrichtung, insbesondere nach einem der Ansprüche 1 bis 12. Die Anlage weist einen Gefahrenbereich auf, der durch die Zugriffsfläche von einem Außenraum her erreichbar ist, und das Freigabesignal ist ein Sicherheitssignal für den Gefahrenbereich. Insbesondere ist der Gefahrenbereich ausschließlich durch die Zugriffsfläche erreichbar. Insbesondere ist die Anlage nur bei Ausgabe des Freigabesignals in Betrieb und/oder es wird ein Alarm ausgelöst, wenn das Freigabesignal endet.

Bei einer vorteilhaften Ausführungsform ist die Anlage ein Funktionsprüffeld, insbesondere Multifunktionsprüffeld, mit wenigstens einer Prüfmaschine mit Gefahrenbereich.

Weitere vorteilhafte Weiterbildungen und bevorzugte Ausführungen der Erfindung sind der Figurenbeschreibung oder den Unteransprüchen zu entnehmen.

Es zeigen:
- Fig. 1: eine erfindungsgemäße Schutzvorrichtung,
- Fig. 2: einen Rahmen zur Aufnahme eines Multifunktionsprüffeldes mit Schutzvorrichtungen aus einer ersten Perspektive,
- Fig. 3: die Schutzvorrichtung aus Fig. 2 aus einer zweiten Perspektive,
- Fig. 4: das zweite Rollo der Schutzvorrichtung aus Fig. 2,
- Fig. 5: das erste Rollo der Schutzvorrichtung aus Fig. 2, und
- Fig. 6: den Fixierungssensor des zweiten Rollos der Schutzvorrichtung aus Fig. 2,
- Fig. 7: ein Rollo mit unmittelbar detektierendem Bewegungsmelder, und
- Fig. 8: ein Rollo mit mittelbar detektierendem Bewegungsmelder,
- Fig. 9: ein Rollo mit alternativem Bewegungsmelder.

### Figurenbeschreibung

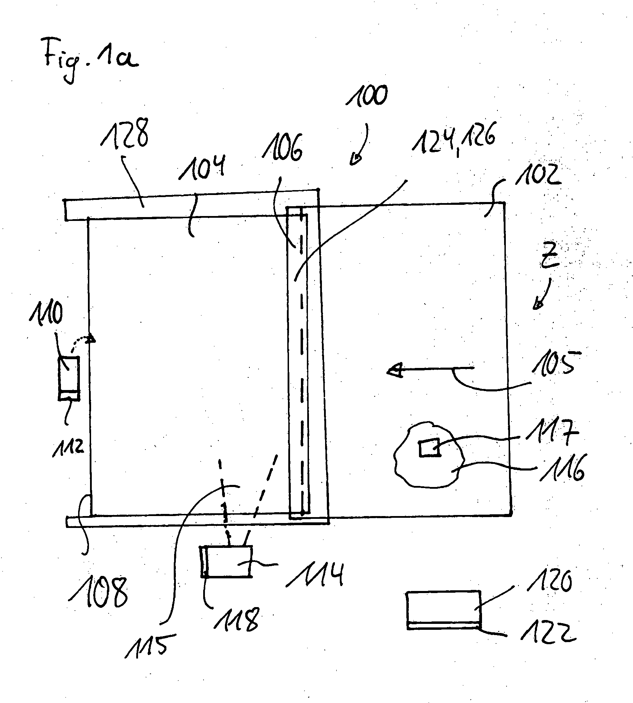

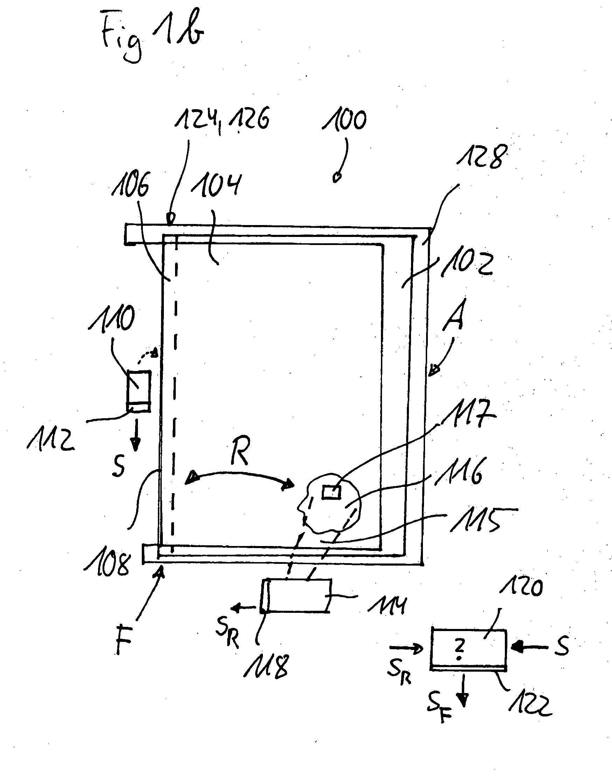

Figur 1 zeigt eine Schutzvorrichtung 100 mit einem beweglichen Abdeckeinrichtung 102. Gezeigt ist auch eine ortsfeste Zugriffsfläche 104. Figur 1a) zeigt die Abdeckeinrichtung 102 in einer Zugriffsposition Z, in der es die Zugriffsfläche 104 freigibt. In Richtung des Pfeils 105 wird die Abdeckeinrichtung 102 in die in Figur 1b) gezeigte Abdeckposition A gebracht, in der es die Zugriffsfläche 104 abdeckt. In der Abdeckposition A liegt ein Fixierabschnitt 106 der Abdeckeinrichtung 102 im Bereich eines Randabschnitts 108 der Zugriffsfläche und ist dort lösbar fixiert. Ein Fixierungssensor 110 dient zur Überwachung der Fixierung F des Fixierabschnitts 106 am angegebenen Ort. An einem Ausgang 112 des Fixierungssensors liegt nur bei vorhandener Fixierung F ein Fixiersignal Sx an.

Fig. 1 zeigt auch einen Bewegungssensor 114, der zur Überwachung einer Relativbewegung R dient, die zwischen einem Überwachungsabschnitt 116 der Abdeckeinrichtung 102 und dessen Fixierabschnitt 106 stattfindet. In der gezeigten Ausführungsform arbeitet der Bewegungssensor berührungslos. Sein Erfassungsbereich 115, z.B. ein Kegel elektromagnetischer oder Ultraschallstrahlung, ist hierzu auf den sich in der Abdeckposition befindlichen Überwachungsabschnitt 116 ausgerichtet. An einem Ausgang 118 des Bewegungssensors 114 liegt nur bei fehlender, also nicht vorhandener Relativbewegung R ein Ruhesignal S_{R} an. Der Bewegungssensor interagiert hier unmittelbar mit der Abdeckeinrichtung 102, d.h. mit deren Oberfläche. In einer alternativen Ausführungsform ist an der Abdeckeinrichtung ein Marker 117 angebracht. Der Bewegungssensor 114 interagiert dann mit dem Marker 117 und erkennt dessen Relativbewegung.

Fig. 1 zeigt noch eine Auswerteeinrichtung 120, an deren Ausgang 122 ein Freigabesignal S_{F} nur dann anliegt, wenn das Fixiersignal S_{X} und das Ruhesignal S_{R} an den Ausgängen 112, 118 von Fixierungssensor 110 und Bewegungssensor 118 anliegen. Ein Anliegen des Freigabesignals S_{F} bedeutet daher, dass sowohl der Fixierabschnitt 106 sich ordnungsgemäß in seiner Fixierung F befindet als auch keine Relativbewegung R des Überwachungsabschnitts 116 zum sich in der Fixierung F befindenden Fixierabschnitt 106 stattfindet.

Fig. 1 zeigt, dass ein Ende 124 der Abdeckeinrichtung 102 bei dessen Bewegung in Richtung des Pfeils 105 - also von der Zugriffsposition Z in die Abdeckposition A - ein vorderes Ende 126 der Abdeckeinrichtung 102 darstellt.

In einer alternativen Ausführungsform weist die Schutzvorrichtung 100 außerdem einen Rahmen 128 auf, der die Zugriffsfläche 104 zumindest teilweise umgrenzt. Der Rahmen 128 dient außerdem zur Führung bzw. mechanischen Stützung der Abdeckeinrichtung 102.

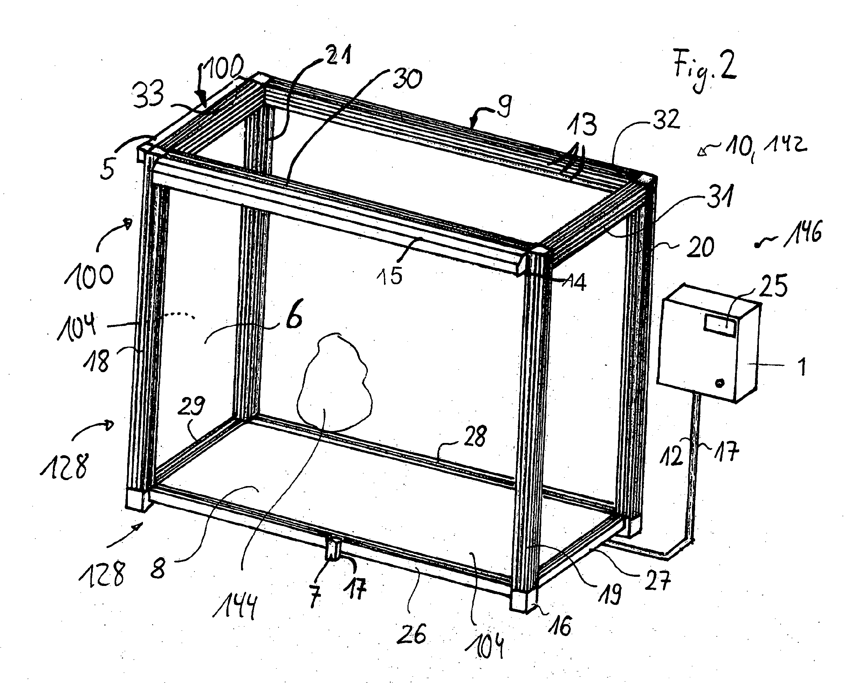

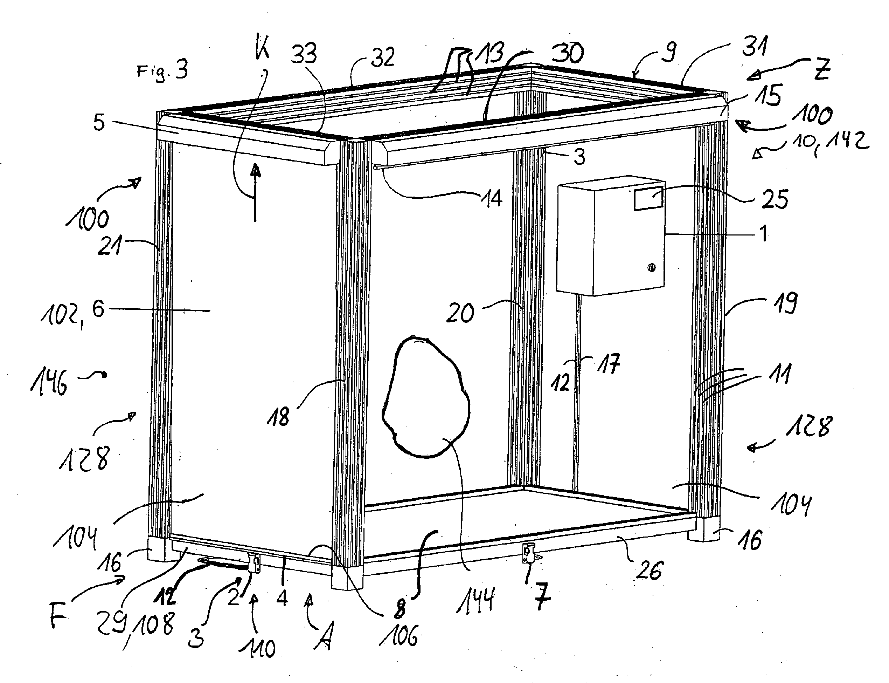

Die Figuren 2 und 3 zeigen eine Anlage 142 in Form eines Multifunktionsprüffeldes 10 mit zwei Schutzvorrichtungen 100, wobei sich im Inneren des Prüffeldes 10 befindliche Prüfmaschinen der Einfachheit halber nicht abgebildet sind. Die Anlage 142 ist von einem Außenraum 146 umgeben. Die gezeigten Schutzvorrichtung 100 weisen Rahmen 128, auf, die Teile eines Käfigs 9 sind, der das gesamte Prüffeld 10 umgibt. Der Käfig 9, ist aus vier Pfosten 18,19,20,21 und acht Querstreben 26,27,28,29,30,31,32,33 gebildet. Der eine Rahmen 128 weist somit die Pfosten 18 und 21 mit Querstreben 33 und 29 auf. Der zweite Rahmen 128 ist aus den Pfosten 18 und 19 und den Querstreben 26 und 30 gebildet. Der Käfig 9 hat die Funktion inne, die öffenbaren und permanenten Abdeckungen zu halten, die zur Abdeckung eines Gefahrenbereiches 144 der Prüfmaschine, die auf dem Boden 8 installierbar ist, benötigt werden. Der Gefahrenbereich 144 ist in den Figuren symbolisch angedeutet.

Der Käfig 9 weist eine Quaderform auf, die durch die vertikal angeordneten Pfosten 18,19,20,21 und die die Pfosten 18,19,20,21 miteinander verbindenden Querstreben 26,27,28,29,30,31,32,33 gebildet wird. Der Boden 8 in Form einer ersten Abdeckung besteht aus einer soliden Metallplatte, die von den unteren Querstreben 26,27,28,29 eingefasst ist. Die Pfosten 18,19,20,21 weisen am unteren Ende jeweils einen Fuß 16 auf, der auf einem Hallen- oder Zimmerboden aufgesetzt werden kann.

Der Käfig 9 weist insgesamt sechs Fenster auf, wobei das Fenster, welches von den unteren Querstreben 26,27,28,29 begrenzt wird bereits durch den Boden 8 permanent abgedeckt ist. Damit kann der Käfig 9 auch alternativ an einer Wand befestigt werden ohne einen manuellen Zugang durch das untere Fenster zu riskieren.

Das durch die oberen Querstreben 30,31,32,33 gebildete Fenster ist in gleicher oder ähnlicher Weise permanent abzudecken, ähnlich wie auch das genannte untere Fenster. Entsprechendes gilt für das aus den Pfosten 20, 21 und den Querstreben 28,32 gebildete Fenster, sofern es nicht bereits durch eine Hallen- oder Zimmerwand abgedeckt ist, an der auch der Käfig 9 befestigt sein könnte. Vorteilhafterweise wird auch eine Steuereinheit 1 des Prüffeldes 10 an der genannten Wand befestigt. Das aus den Pfosten 19,20 und den Querstreben 27,31 gebildete Fenster ist nur für die visuelle Kontrolle der Prüfmaschine erforderlich und kann beispielsweise mit einer fest angebrachten Plexiglasplatte abgedeckt werden.

Zur Herstellung des Käfigs 9 bieten sich sogenannte Profilstangen als Querstreben 30,31,32,33 oder Pfosten 18,19,20,21 an, die vorteilhafterweise aus Aluminium gefertigt sind. Das ausgebildete Profil an deren Außenflächen kann Nuten 11,13 aufweisen, die entweder zur Befestigung permanenter Abdeckungen, zur Befestigung von Rollos oder gegebenenfalls auch zur seitlichen Führung einer Rolloplane verwendbar sind.

Der Rahmen 9 weist zwei mit Rollos abdeckbare Fenster auf, die jeweils mit einem ersten und zweiten rollbaren Rollo versehen sind. Jedes dieser beiden Fenster stellt eine Zugriffsfläche 104 dar. Das zugehörige Abdeckeinrichtung 102 ist als eine erste rollbare Rolloplane 6 des ersten Rollos ausgeführt, die zur Abdeckung des aus den Pfosten 18,21 und den Querstreben 29, 33 gebildeten Seitenfensters bzw. der dortigen Zugriffsfläche 104 vorgesehen ist. Die erste Rolloplane 6 ist an einer drehbar gelagerten und mit einer Federkraft beaufschlagten Achse im Rollokasten 5 befestigt. Somit bildet das erste Rollo ein Springrollo, welches zum selbsttätigen Aufrollen vorgesehen ist. Damit ist das Rollo in der gezeigten Abdeckposition A mit einer Zugkraft K in Richtung zur Zugriffsposition Z hin belastet, mit anderen Worten also gespannt.

Auch das zweite Rollo ist als rollbares Rollo ausgeführt, könnte aber alternativ auch als Faltrollo ausgeführt werden, womit eine Achse und deren Lagerung nicht notwendig wäre. Der Rollokasten 15 diente dann nur zum Schutz der zusammengefalteten Rolloplane oder könnte auch ganz entfallen. Dieses befindet sich in der Zugriffsposition Z. Die Rollos können insbesondere als Informationsträger verwendet werden. Z.B. kann auf einem transparenten Rollo ein Schriftzug angebracht werden, z.B. einen Unternehmensnamen oder eine Aufschrift "Vorsicht, Anlage in Betrieb" usw.

Der Rollokasten 5 ist an der Querstrebe 33 in einer Nut befestigt, damit lässt sich das Rollo auch an einer anderen Querstrebe mit Nut befestigen. Im vollständig abgerollten Zustand der Rolloplane 6 befindet sich diese in der Abdeckposition A gemäß Fig. 3. Der Fixierabschnitt 106 der Abdeckeinrichtung 102 befindet sich dabei im Bereich des Randabschnittes 108 in Form der Querstrebe 29. In dieser Position findet eine Fixierung F statt, die vom Fixierungssensor 110, der als Endlagenschalter 2 ausgeführt ist, überwacht wird. In der Abdeckposition A wird das Seitenfenster derart abgedeckt, dass keine Person in das Innere des Käfigs 9 greifen kann, ohne die Rolloplane 6 zu berühren oder diese sogar aus der Abdeckposition A herauszubewegen. Somit erkennt eine Person unweigerlich, dass es sich hier um einen Gefahrenbereich handelt. Somit beruht das Eindringen in den Gefahrenbereich durch eine vorherige Bewegung des Rollos aus dessen Abdeckposition A heraus oder einer anderen Maßnahme, auf einer bewussten Entscheidung.

Beide Rolloplanen 6 weisen endseitig jeweils eine Griffleiste 4,14 zur besseren Handhabung auf, an der idealerweise auch ein Kontaktstecker 3 als Kontakt 130 befestigt ist. Der Kontaktstecker 3 ist zur Wechselwirkung bzw. Eingriffsverbindung mit dem Endlagenschalter 7 als Geber 132 vorgesehen. Zusammen bilden Kontakt 130 und Geber 132 den Fixierungssensor 110. Anhand des in den Endlagenschalter 7 eingeführten Kontaktsteckers 3 überprüft der Endlagenschalter 7 unter Verwendung eines passenden Schlüssels, ob es sich tatsächlich um den Kontaktstecker 3 handelt. Denn die Abdeckung des zweiten abdeckbaren Fensters durch das zweite Rollo ist nur dann gewährleistet, wenn der Kontaktstecker 3 im Endlagenschalter 7 korrekt positioniert ist. Die charakteristische Form des Kontaktsteckers 3 soll Sensormanipulationen entgegenwirken, die erfahrungsgemäß mit unsachgemäßen Fremdmitteln, wie zum Beispiel Kaugummis oder Schraubendreher, versucht werden, um die Sicherungsschaltung des Endlagenschalters zu überbrücken. Der Endlagenschalter 2 des ersten Rollos enthält den zugehörigen Kontaktstecker 3, weil sich die Rolloplane 6 in Abdeckposition A befindet.

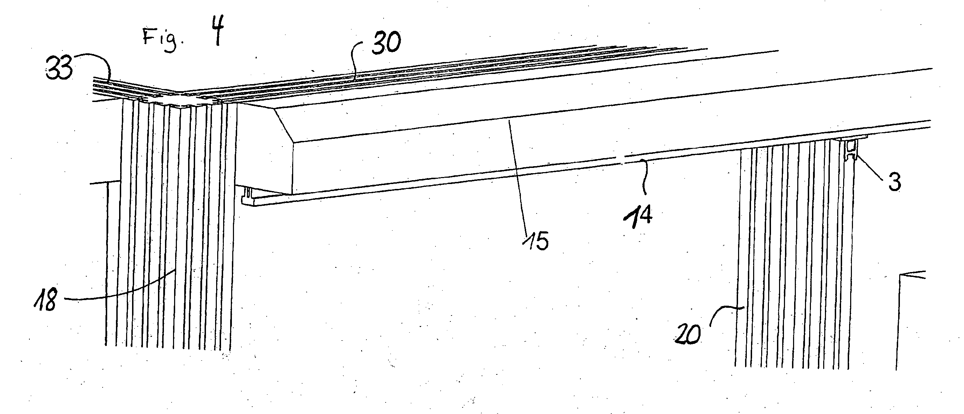

Aus Figur 4 ist erkennbar, dass der Kontaktstecker 3 eine Öffnung aufweist, die sowohl zur Erkennung des Kontaktsteckers 3 (Wechselwirkung zur Erkennung der Fixierung) anhand des Schlüssels im Endlagenschalter 7, als auch für einen Rückhaltemechanismus (Eingriffsverbindung zum mechanischen Halten des Rollos in der Abdeckposition A) verwendbar ist. Dieser Rückhaltemechanismus ist ebenfalls im Endlagenschalter 7 untergebracht, wobei dies nicht zwingend erforderlich ist. Ein Rückhaltemechanismus könnte auch durch einen Klettverschluss, eine Einhängelasche oder ähnliche Mittel bewerkstelligt werden, die außerhalb des als Endlagenschalters 2,7 ausgeführten Sensors, wie zum Beispiel auf der Querstrebe 26, angeordnet sind.

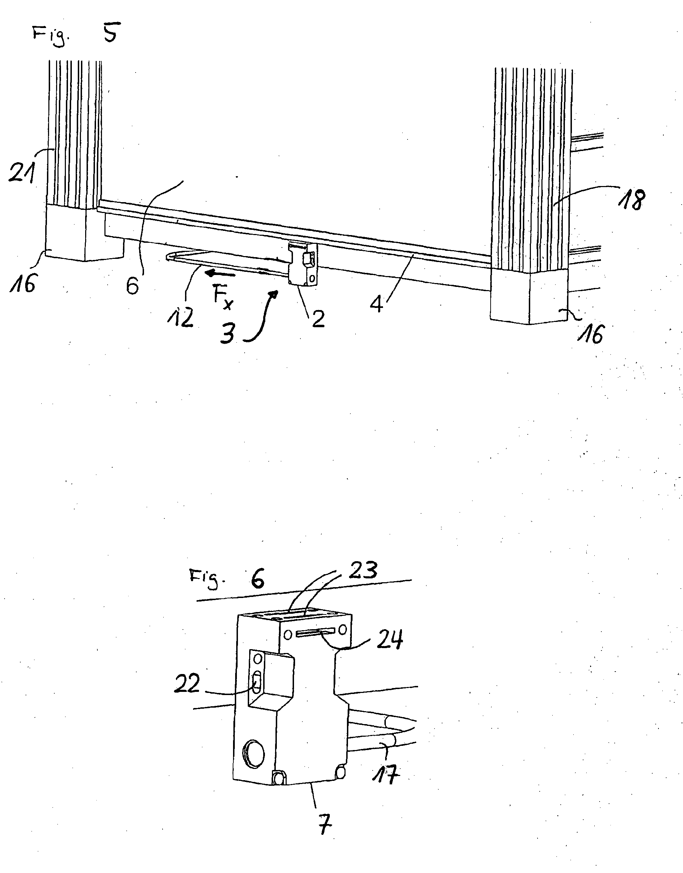

Die Endlagenschalter 2,7 können mittels Langlöchern 22 am Rahmen 9 befestigt werden. Die Endlagenschalter 2,7 sind in den Figuren 5 und 6 im Detail gezeigt, wobei der Endlagenschalter 2 im gezeigten Zustand ein elektrisches Fixiersignal F_{X} über die Signalleitung 12 an die Steuereinheit 1 sendet. Endlagenschalter 7 sendet derzeit kein Fixiersignal F_{X} über die Signalleitung 17, weil beide Steckschlitze 23 unbelegt sind, das heißt, dass der zugehörige Kontaktstecker 3 nicht in der zur Fixierung F erforderlichen korrekten Position ist. Damit empfängt die Steuereinheit 1 nur eines von zwei erforderlichen Fixiersignalen F_{X}, womit das Multifunktionsprüffeld 10 wie gezeigt nicht operabel ist. Dies wird gegebenenfalls auf der optischen Anzeige 25 der Steuereinheit 1 angezeigt. Eine Reparatur der (nicht abgebildeten) Prüfmaschine wäre im derzeitigen Zustand des Multifunktionsprüffeldes 10 ohne Sicherheitsbedenken möglich.

Der Erkennungsmechanismus innerhalb der beiden Endlagenschalter 2,7 kann auf unterschiedlichen Techniken beruhen. Dieser kann mit einer klassischen, mechanischen Schlüssel-Schloss Methode realisiert werden, aber auch basierend auf einem elektrischen Kontakt, der durch die korrekte Position des Kontaktsteckers 3 umgesetzt wird. Alternativ kann es sich auch um eine magnetische, kapazitive oder optische Erkennungstechnik handeln.

Ein Rückhaltemechanismus der Endlagenschalter 2,7 könnte auch durch eine Belegung einer Verriegelungsöffnung 24 gewährleistet sein, die mit einem (nicht abgebildeten) Verriegelungsstift dafür sorgt, dass das Rollo die Abdeckposition nicht verlässt.

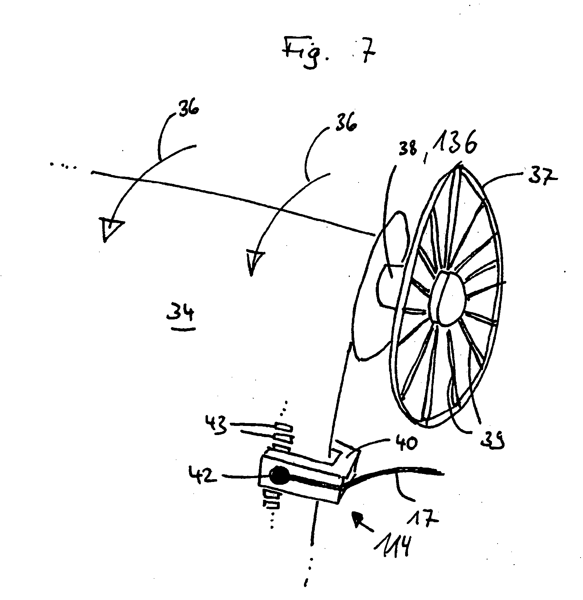

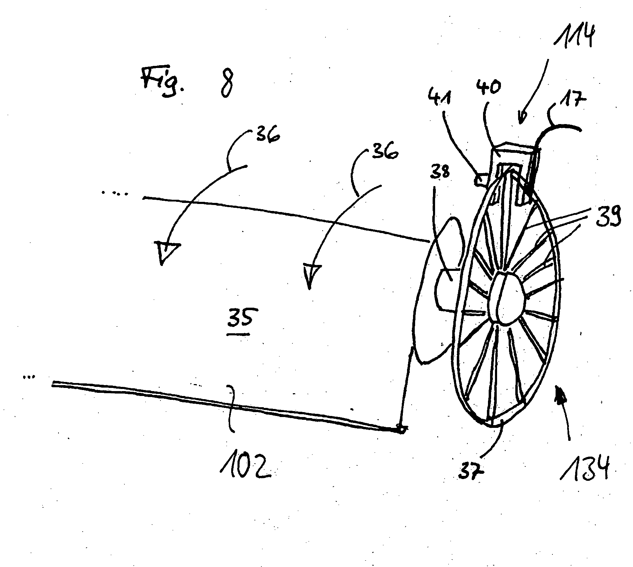

Die Figuren 7 und 8 zeigen jeweils ein Ausführungsbeispiel eines Rollos mit Bewegungssensor 114. Der Bewegungssensor 114 ist als Gabellichtschranke ausgeführt, die zwei parallel zueinander angeordnete Schenkel aufweist, wobei auf einem Schenkel die Lichtquelle 42 befestigt ist, um dem Lichtdetektor 41 auf dem zweiten Schenkel gegenüberzuliegen. Im nicht sichtbaren Lichtstrahl (Infrarotstrahlung) zwischen dem Lichtdetektor 41 und der Lichtquelle 42 ist jeweils der Signalgeber angeordnet, der in Figur 7 an der Rolloplane 34 selbst ausgebildet ist und in Figur 8 als Speichenrad 37 ausgeführt ist. In Figur 8 arbeitet der Bewegungssensor 114 nicht unmittelbar mit dem Abdeckelement 102 zusammen, sondern mit einem Kontrollelement 134, nämlich dem Speichenrad 37. Der Überwachungsabschnitt 116 wird hier durch die gesamte Abdeckvorrichtung 102 (ausgenommen der Fixierabschnitt 106) gebildet. Das Kontrollelement 134 ist so gestaltet, dass jede unerlaubte Relativbewegung R des Überwachungsabschnitts 116 zu einer Bewegung des Kontrollelement 134 führt, die dann vom Bewegungssensor 114 detektiert wird. Das Speichenrad 37 zusammen mit dem Bewegungssensor 114 bildet damit einen Winkellagegeber 140 nach Art eines Inkrementalwinkelgebers.

Die Schlitze 43 sind in Rollrichtung 36 nebeneinander angeordnet und bilden einen Signalgeber aus, der bei Bewegung des Rollos den Lichtstrahl alternierend unterbricht und freigibt, wobei im Lichtdetektor 41 alternierende Signale generiert werden, die im Bewegungssensor 114 verarbeitet werden und zur Auslösung einer Schutzmaßnahme herangezogen werden können. Der Lichtstrahl stellt damit einen Erfassungsbereich 115 des Bewegungssensors 114 dar. Der Bewegungssensor 114 gibt ein Ruhesignal S_{R} nur dann auf die Signalleitung 17, wenn keine Bewegung der Schlitze 43 oder der Speichen 39 im Bewegungssensor 114 erkannt wird. Die Schlitze bilden damit Marker 117, die mit dem Bewegungssensor 114 interagieren. Jede zu detektierende Relativbewegung R des Rollos, der hier in seiner Gesamtheit (ausgenommen den Fixierabschnitt 106) den Überwachungsabschnitt 116 bildet, würde zu einer Bewegung der Schlitze 43 oder des Speichenrades 37 führen. Jede Bewegung führt daher zu einem Abfall des Ruhesignals S_{R}.

In Figur 7 ist die Gabellichtschranke am Speichenrad 37 angeordnet, welches mittelbar mit der Rolloplane 35, über die Rolloachse bzw. Welle 38 verbunden ist. Über die Breite und Anzahl der Speichen 39 kann die Sensitivität des Bewegungssensors 114 vorteilhaft eingestellt werden. Die Welle 38 dient damit als Führungsmittel 136 der Abdeckeinrichtung 102, also der Rolloplane. In einer alternativen Ausführungsform kann das Führungsmittel 136 als Kontrollelement 134 benutzt werden, da sich die Welle 38 ebenfalls bei der o.g. unerlaubten Relativbewegung R des Überwachungsabschnitts 116 bewegt. Der Bewegungssensor 114 detektiert dann die Rotation der Welle 38 als Bewegung.

Es ist ohne weiteres möglich ein Rollo der Figuren 1 bis 5 mit einem Rollo auf Basis einer Bewegungsdetektion, wie in den Figuren 6 und 7 gezeigt, zu ersetzen.

Gemäß der Erfindung werden die Ausführungsbeispiele der Figuren 3 bis 5 mit den Ausführungsbeispielen der Figuren 6 und 7 kombiniert, um einen höheren Grad der Überwachung zu erreichen und Manipulationen auszuschließen. Mit anderen Worten, eine Rolloplane, deren Abdeckposition mittels eines Endlagenschalters überwacht wird, wird auch noch einen Bewegungssensor 114 aufweisen, der beispielsweise eine rotatorische oder lineare Bewegung der Rolloplane detektieren kann. Die Fixiersignale F_{X} und Ruhesignale S_{R} werden jeweils der Steuereinheit 1 zugeführt. In deren Innerem sind für jede Schutzvorrichtung 100 jeweils das Fixiersignal F_{X} und Ruhesignal S_{R} auf eine Auswerteeinrichtung 120 geführt, die gemäß oben die Freigabesignale S_{F} ausgibt. Nur wenn die Freigabesignale beider Schutzvorrichtungen 100 vorliegen, wird das Multifunktionsprüffeld betrieben.

Somit würde eine Sicherungsmaßnahme beispielsweise immer dann eingeleitet, wenn entweder einer der Abwickelmechanismus bewegt wird oder einer der Endpositionsschalter keine Fixierung mehr detektieren kann.

Idealerweise erfolgt die Auswertung der elektrischen Signale durch die Steuereinheit 1 ebenfalls auf elektrischem Wege, um die Sicherungsmaßnahme, beziehungsweise die Abschaltung, zu erzwingen.

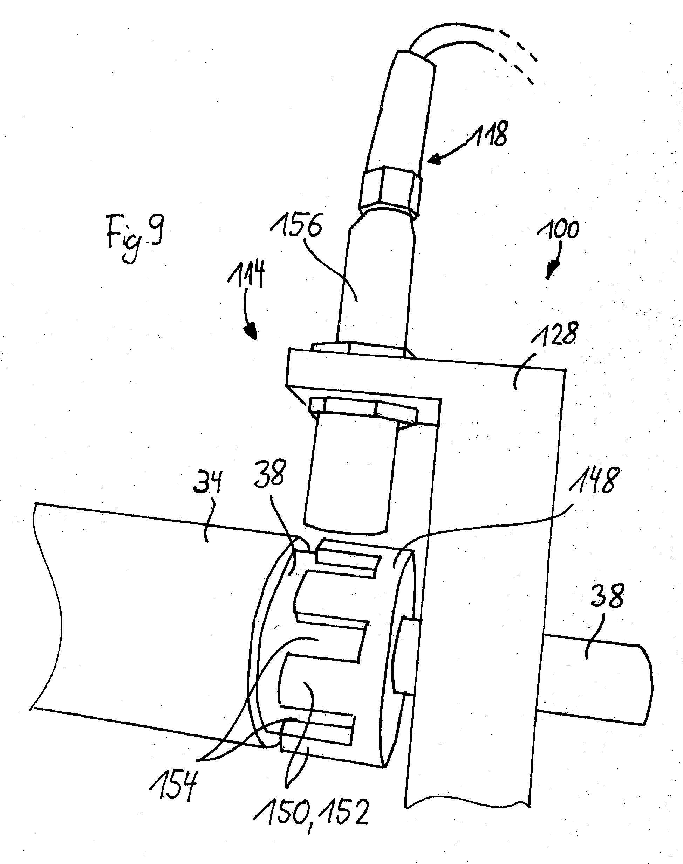

Fig. 9 zeigt einen Ausschnitt aus einer alternativen Schutzvorrichtung 100 mit einem Teil des Rahmens 128, in welchem eine Welle 38 des Rollos rotierbar gelagert ist. Auf der Welle 38 ist die Rolloplane 34 gehalten. Auf der Welle 38 ist außerdem drehfest, d.h. bewegungsgekoppelt, als Signalgeber des Bewegungssensors 114 ein zahnradartiges Strukturteil 148 angebracht. Diese weist Zähne 150 in Form von sich axial entlang der Welle 38 erstreckenden Fingern 152 auf, die jeweils Zahnlücken 154 zwischen sich einschließen.

Am Rahmen ist ein Sensorelement 156 des Bewegungssensors 114 fixiert, hier ein Näherungssensor, der auf das Strukturteil 148 ausgerichtet ist. Das Sensorelement 156 detektiert die Anwesenheit eines Zahnes 150 oder einer Zahnlücke 154. Am Ausgang 118 des Bewegungssensors 114, der in Fig. 9 durch einen nicht näher bezeichneten Steckkontakt kontaktiert ist, liegt das Ruhesignal S_{R} nur dann an, wenn das Sensorelement 156 keinen Wechsel zwischen Detektionen eines Zahnes 150 oder einer Zahnlücke 154 erkennt. Auch hier ist damit der Bewegungssensor 114 als Winkellagegeber 140 ausgebildet, der als Inkrementalwinkelgeber stets Informationen in Form von Signalwechseln im Ruhesignal S_{R} (Wechsel zwischen der Detektion eines Zahnes 150 oder einer Zahnlücke 154) bei bestimmten Drehwinkeln (Flanken der Zähne 150) ausgibt.

### Bezugszeichenliste

- 1: Steuereinheit
- 2: Endlagenschalter
- 3: Kontaktstecker
- 4: Rollogriffleiste
- 5: Rollokasten
- 6: Rolloplane
- 7: Endlagenschalter
- 8: Bodenplatte
- 9: Käfig
- 10: Multifunktionsprüffeld
- 11: Vertikale Nut
- 12: Signalleitung
- 13: Horizontale nut
- 14: Rollogriffleiste
- 15: Rollokasten
- 16: Fuß
- 17: Signalleitung
- 18: Pfosten
- 19: Pfosten
- 20: Pfosten
- 21: Pfosten
- 22: Langloch
- 23: Steckschlitz
- 24: Verriegelungsöffnung
- 25: Optische Anzeige
- 26: Untere Querstrebe
- 27: Untere Querstrebe
- 28: Untere Querstrebe
- 29: Untere Querstrebe
- 30: Obere Querstrebe
- 31: Obere Querstrebe
- 32: Obere Querstrebe
- 33: Obere Querstrebe
- 34: Rolloplane
- 35: Rolloplane
- 36: Abrollrichtung
- 37: Speichenrad
- 38: Welle
- 39: Speiche
- 40: Haltegabel
- 41: Lichtdetektor
- 42: Lichtquelle
- 43: Schlitz
- 100: Schutzvorrichtung
- 102: Abdeckeinrichtung
- 104: Zugriffsfläche
- 106: Fixierabschnitt
- 108: Randabschnitt
- 110: Fixierungssensor
- 112: Ausgang
- 114: Bewegungssensor
- 115: Erfassungsbereich
- 116: Überwachungsabschnitt
- 117: Marker
- 118: Ausgang
- 120: Auswerteeinrichtung
- 122: Ausgang
- 124: Ende
- 126: vorderes Ende
- 128: Rahmen
- 130: Kontakt
- 132: Geber
- 134: Kontrollelement
- 136: Führungsmittel
- 140: Winkellagegeber
- 142: Anlage
- 144: Gefahrenbereich
- 146: Außenraum
- 148: Strukturteil
- 150: Zahn
- 152: Finger
- 154: Zahnlücke

- A: Abdeckposition
- F: Fixierung
- K: Zugkraft
- R: Relativbewegung
- S_{F}: Freigabesignal
- S_{R}: Ruhesignal
- Sx: Fixiersignal
- Z: Zugriffsposition

## Patentansprüche

1. Verfahren zur Überwachung eines Zutritts oder Zugriffs durch eine Zugriffsfläche (104), bei dem:
- eine Abdeckeinrichtung (102) zwischen einer die Zugriffsfläche (104) freigebenden Zugriffsposition (Z) und einer die Zugriffsfläche (104) abdeckenden Abdeckposition (A) bewegt wird,
- in der Abdeckposition (A) ein Fixierabschnitt (106) der Abdeckeinrichtung (102) im Bereich eines Randabschnitts (108) der Zugriffsfläche (104) lösbar fixiert wird,
- die Fixierung (F) des Fixierabschnitts (106) überwacht wird, **dadurch gekennzeichnet, dass**
- eine Relativbewegung (R) eines vom Fixierabschnitt (106) verschiedenen Überwachungsabschnitts (116) der Abdeckeinrichtung (102) relativ zum Fixierabschnitt (106) überwacht wird,
- ein Freigabesignal (S_{F}) nur dann erzeugt wird, wenn gemäß der Überwachungen sowohl die Fixierung (F) des Fixierabschnitts (106) als auch keine Relativbewegung (R) des Überwachungsabschnitts (116) erkannt wird.

2. Schutzvorrichtung (100), mit einer Abdeckeinrichtung (102), beispielsweise einer Rolloplane, das zwischen einer eine Zugriffs- oder Zugriffsfläche (104) freigebenden Zugriffsposition (Z) und einer die Zugriffsfläche (104) abdeckenden Abdeckposition (A) bewegbar ist, wobei in der Abdeckposition (A) ein Fixierabschnitt (106) der Abdeckeinrichtung (102) im Bereich eines Randabschnitts (108) der Zugriffsfläche (104) lösbar fixiert ist, mit einem Fixierungssensor (110) zur Überwachung der Fixierung (F) des Fixierabschnitts (106), wobei der Fixierungssensor (110) derart ausgebildet ist, dass an seinem Ausgang (112) nur bei vorhandener Fixierung (F) ein Fixiersignal (S_{X}) anliegt, **gekennzeichnet durch**
- einen Bewegungssensor (114) zur Überwachung einer Relativbewegung (R) eines vom Fixierabschnitt (106) verschiedenen Überwachungsabschnitts (116) der Abdeckeinrichtung (102) relativ zum Fixierabschnitt (106), wobei der Bewegungssensor (114) derart ausgebildet ist, dass an seinem Ausgang (118) nur bei fehlender Relativbewegung (R) ein Ruhesignal (S_{R}) anliegt,
- und eine Auswerteeinrichtung (120), die derart ausgebildet ist, dass an ihrem Ausgang (122) ein Freigabesignal (S_{F}) nur dann anliegt, wenn das Fixiersignal (S_{X}) und das Ruhesignal (S_{R}) an den Ausgängen (112,118) von Fixierungssensor (110) und Bewegungssensor (114) anliegen.

3. Schutzvorrichtung (100) nach Anspruch 2, bei der ein solches Ende (124) der Abdeckeinrichtung (102), das bei einer Bewegung der Abdeckeinrichtung (102) von der Zugriffsposition (Z) zur Abdeckposition (A) ein vorderes Ende (126) darstellt, den Fixierabschnitt (106) bildet.

4. Schutzvorrichtung (100) nach einem der Ansprüche 2 bis 3, bei der die Abdeckeinrichtung (102) in der Abdeckposition (A) in Richtung zur Zugriffsposition (Z) hin mit einer Zugkraft (K) belastet ist.

5. Schutzvorrichtung (100) nach einem der Ansprüche 2 bis 4, bei dem der Fixierungssensor (110) enthält:
- einen zur Zugriffsfläche (104) ortsfixierten Geber (132), - und einen zum Fixierabschnitt (106) ortsfixierten Kontakt (130), der nur bei Fixierung (F) des Fixierabschnitts (106) in Wechselwirkung oder Eingriffsverbindung mit dem Geber (132) steht,
- und das Fixiersignal (S_{X}) nur anliegt, wenn Kontakt (130) und Geber (132) in Wechselwirkung oder Eingriffsverbindung stehen.

6. Schutzvorrichtung (100) nach einem der Ansprüche 2 bis 5, mit einem Rahmen (128), wobei die die Zugriffsfläche (104) vom Rahmen (128) umgeben ist.

7. Schutzvorrichtung (100) nach einem der Ansprüche 2 bis 6, bei dem der Bewegungssensor (114) relativ zum sich in der Abdeckposition (A) befindlichen Fixierabschnitt (106) ortsfixiert ist, und ein Erfassungsbereich (115) des Bewegungssensors (114) auf den Überwachungsabschnitt (116) ausgerichtet ist.

8. Schutzvorrichtung (100) nach Anspruch 7, bei dem im oder am Überwachungsabschnitt (116) ein mit dem Bewegungssensor (114) wechselwirkender Marker (117) an der Abdeckeinrichtung (102) fixiert ist, und am Ausgang (118) des Bewegungssensors (114) das Ruhesignal (S_{R}) nur anliegt, wenn keine Relativbewegung (R) des Markers (117) zum Bewegungssensor (114) erfolgt.

9. Schutzvorrichtung (100) nach einem der Ansprüche 2 bis 6, bei dem die Abdeckeinrichtung (102) derart mit einem beweglichen Kontrollelement (134) bewegungsgekoppelt ist, dass eine Relativbewegung (R) des Überwachungsabschnitts (116) eine Bewegung des Kontrollelements (134) bewirkt, und der Bewegungssensor (114) zur Überwachung der Bewegung des Kontrollelements (134) ausgebildet ist, wobei am Ausgang (118) des Bewegungssensors (114) das Ruhesignal (S_{R}) nur bei fehlender Bewegung des Kontrollelements (134) anliegt.

10. Schutzvorrichtung (100) nach Anspruch 9, bei der das Kontrollelement (134) ein sich bei einer Relativbewegung (R) des Überwachungsabschnitts (116) bewegendes Führungsmittel (136) der Abdeckeinrichtung (102) ist.

11. Schutzvorrichtung (100) nach Anspruch 10, bei der das Führungsmittel(136) eine drehbare Welle (38) ist, von der die Abdeckeinrichtung (102) bei Bewegung von der Zugriffsposition (Z) in die Abdeckposition (A) abrollbar ist, und der Bewegungssensor (114) zur Überwachung der Rotation der Welle (38) ausgebildet ist.

12. Schutzvorrichtung (100) nach Anspruch 11, bei der der Bewegungssensor (114) einen mit der Welle (38) bewegungsgekoppelten Winkellagegeber (140) zur Überwachung einer Rotation der Welle (38) enthält, wobei das Ruhesignal (S_{R}) am Ausgang (118) des Bewegungssensors (114) nur bei Fehlen der Rotation anliegt.

13. Schutzvorrichtung (100) nach Anspruch 12, bei der der Winkellagegeber (140) ein mit der Welle (38) bewegungsgekoppeltes zahnradartiges Strukturteil (148) und ein dessen Zähne (150) und Zahnlücken (154) detektierendes Sensorelement (156) enthält, wobei am Ausgang (118) des Bewegungssensors (114) das Ruhesignal (S_{R}) nur anliegt, wenn im Sensorelement kein Wechsel zwischen Detektionen eines Zahnes und einer Zahnlücke vorliegt.

14. Anlage (142) mit einer Schutzvorrichtung (100) nach einem der Ansprüche 2 bis 13, bei der
- die Anlage (142) einen Gefahrenbereich (144) aufweist, der durch die Zugriffsfläche (104) von einem Außenraum (146) her erreichbar ist, und
- das Freigabesignal (S_{F}) ein Sicherheitssignal für den Gefahrenbereich (144) ist.

15. Anlage (142) nach Anspruch 14, bei der die Anlage (142) ein Funktionsprüffeld, insbesondere ein Multifunktionsprüffeld (10) ist, das wenigstens eine Prüfmaschine enthält, die den Gefahrenbereich (144) aufweist.

## Claims

1. A method for monitoring admission or access through an access area (104), wherein:
- a covering device (102) is moved between an access position (Z) clearing the access area (104) and a covering position (A) covering the access area (104),
- in the covering position (A) a fixing section (106) of the covering device (102) is detachably fixed in the region of an edge section (108) of the access area (104),
- the fixing (F) of the fixing section (106) is monitored, **characterised in that**
- a relative movement (R) of a monitoring section (116) of the covering device (102), different from the fixing section (106), is monitored relative to the fixing section (106),
- a release signal (S_{F}) is only generated if, according to the monitoring, both the fixing (F) of the fixing section (106) and no relative movement (R) of the monitoring section (116) is identified.

2. A protection apparatus (100) comprising a covering device (102), for example a roller tarpaulin, that can be moved between an access position (Z) clearing an admission or access area (104) and a covering position (A) covering the access area (104), in the covering position (A) a fixing section (106) of the covering device (102) being detachably fixed in the region of an edge section (108) of the access area (104), with a fixing sensor (110) for monitoring the fixing (F) of the fixing section (106), the fixing sensor (110) being formed such that a fixing signal (Sx) is only given at its output (112) if there is fixing (F), **characterised by**
- a movement sensor (114) for monitoring a relative movement (R) of a monitoring section (116) of the covering device (102), different from the fixing section (106), relative to the fixing section (106), the movement sensor (114) being formed such that a quiescent signal (S_{R}) is only given at its output (118) when there is no relative movement (R),
- and an assessment device (120), which is formed such that a release signal (S_{F}) is only given at its output (122) if the fixing signal (Sₓ) and the quiescent signal (S_{R}) are given at the outputs (112, 118) of the fixing sensor (110) and the movement sensor (114).

3. The protection apparatus (100) according to Claim 2, wherein an end (124) of the covering device (102), that constitutes a front end (126) when the covering device (102) is moved from the access position (Z) to the covering position (A), forms the fixing section (106).

4. The protection apparatus (100) according to any of Claims 2 to 3, wherein the covering device (102), in the covering position (A), is loaded in the direction of the access position (Z) with a tensile force (K).

5. The protection apparatus (100) according to any of Claims 2 to 4, wherein the fixing sensor (110) contains:
- a transmitter (132) location-fixed to the access area (104),
- and a contact (130) location-fixed to the fixing section (106) and which only interacts with or is in engaged connection to the transmitter (132) when there is fixing (F) of the fixing section (106),
- and the fixing signal (Sₓ) is only given when the contact (130) and the transmitter (132) interact or are in engaged connection.

6. The protection apparatus (100) according to any of Claims 2 to 5, with a frame (128), the access area (104) being surrounded by the frame (128).

7. The protection apparatus (100) according to any of Claims 2 to 6, wherein the movement sensor (114) is location-fixed relative to the fixing section (106) located in the covering position (A), and a detection region (115) of the movement sensor (114) is aligned to the monitoring section (116).

8. The protection apparatus (100) according to Claim 7, wherein a marker (117) on the covering device (102) interacting with the movement sensor (114) is fixed in or on the monitoring section (116), and the quiescent signal (S_{R}) is only given at the output (118) of the movement sensor (114) if there is no relative movement (R) of the marker (117) towards the movement sensor (114).

9. The protection apparatus (100) according to any of Claims 2 to 6, wherein the covering device (102) is movement-coupled to a moveable control element (134) such that a relative movement (R) of the monitoring section (116) brings about a movement of the control element (134), and the movement sensor (114) is formed to monitor the movement of the control element (134), the quiescent signal (S_{R}) only being given at the output (118) of the movement sensor (114) if there is no movement of the control element (134).

10. The protection apparatus (100) according to Claim 9, wherein the control element (134) is a guide means (136) of the covering device (102) that moves when there is a relative movement (R) of the monitoring section (116).

11. The protection apparatus (100) according to Claim 10, wherein the guide means (136) is a rotatable shaft (38) by means of which the covering device (102) can be rolled into the covering position (A) upon movement from the access position (Z), and the movement sensor (114) is formed to monitor the rotation of the shaft (38).

12. The protection apparatus (100) according to Claim 11, wherein the movement sensor (114) contains an angular position transmitter (140) movement-coupled to the shaft (38) for monitoring rotation of the shaft (38), the quiescent signal (S_{R}) only being given at the output (118) of the movement sensor (114) when there is no rotation.

13. The protection apparatus (100) according to Claim 12, wherein the angular position transmitter (140) contains a cog wheel-like structure part (148) movement-coupled to the shaft (38) and a sensor element (156) that detects its teeth (150) and spaces between the teeth (154) of the latter, the quiescent signal (S_{R}) only being given at the output (118) of the movement sensor (114) if there is no change between detections of a tooth or a gap between teeth in the sensor element.

14. A facility (142) comprising a protection apparatus (100) according to any of Claims 2 to 13, wherein
- the facility (142) has a danger area (144) which can be reached from an external space (146) via the access area (104), and
- the release signal (S_{F}) is a safety signal for the danger area (144).

15. The facility (142) according to Claim 14, wherein the facility (142) is a function testing field, in particular a multi-function testing field (10), that contains at least one testing machine that has the danger area (144).

## Revendications

1. Procédé destiné à surveiller une entrée ou un accès via une surface d'accès (104), dans lequel :
- un dispositif d'occultation (102) est déplacé entre une position d'accès (Z) libérant la surface d'accès (104) et une position d'occultation (A) recouvrant la surface d'accès (104),
- dans la position d'occultation (A), une partie de fixation (106) du dispositif d'occultation (102) est fixée de façon amovible dans la région d'une partie de bord (108) de la surface d'accès (104),
- la fixation (F) de la partie de fixation (106) est surveillée,
**caractérisé en ce que**
- un mouvement relatif (R) par rapport à la partie de fixation (106) d'une partie de contrôle (116) du dispositif d'occultation (102), distincte de la partie de fixation (106), est contrôlé,
- un signal d'autorisation (S_{F}) n'est émis que si, en fonction des contrôles, sont détectées à la fois la fixation (F) de la partie de fixation (106) et l'absence de mouvement relatif (R) de la partie de contrôle (116).

2. Dispositif de protection (100), comprenant
un dispositif d'occultation (102), par exemple une toile de store qui est déplaçable entre une position d'accès (Z) libérant une surface d'accès (104) et une position d'occultation (A) recouvrant la surface d'accès (104), une partie de fixation (106) du dispositif d'occultation (102) étant, dans la position d'occultation (A), fixée de façon amovible dans la région d'une partie de bord (108) de la surface d'accès (104),
un capteur de fixation (110) pour le contrôle de la fixation (F) de la partie de fixation (106), le capteur de fixation (110) étant conçu de façon telle qu'un signal de fixation (Sₓ) n'est appliqué à sa sortie (112) qu'en présence de la fixation (F),
**caractérisé par**
- un capteur de déplacement (114) pour le contrôle d'un mouvement relatif (R) par rapport à la partie de fixation (106) d'une partie de contrôle (116) du dispositif d'occultation (102), distincte de la partie de fixation (106), le capteur de déplacement (114) étant conçu de façon telle qu'un signal de repos (S_{R}) n'est appliqué à sa sortie (118) qu'en l'absence d'un mouvement relatif (R),
- et un dispositif d'évaluation (120) conçu de façon telle qu'un signal d'autorisation (S_{F}) n'est appliqué à sa sortie (122) que lorsque le signal de fixation (Sₓ) et le signal de repos (S_{R}) s'appliquent aux sorties (112, 118) du capteur de fixation (110) et du capteur de déplacement (114).

3. Dispositif de protection (100) selon la revendication 2, dans lequel la partie de fixation (106) est formée par l'extrémité (124) du dispositif d'occultation (102) qui représente, lors d'un mouvement du dispositif d'occultation (102) de la position d'accès (Z) à la position d'occultation (A), une extrémité avant (126).

4. Dispositif de protection (100) selon l'une des revendications 2 à 3, dans lequel le dispositif d'occultation (102) est sollicité dans la position d'occultation (A) par une force de traction (K) dans la direction de la position d'accès (Z).

5. Dispositif de protection (100) selon l'une des revendications 2 à 4, dans lequel le capteur de fixation (110) comprend :
- un capteur (132) fixe par rapport à la surface d'accès (104),
- et un contact (130) fixe par rapport à la partie de fixation (106), lequel n'est en interaction ou en liaison de prise avec le capteur (132) qu'en cas de fixation (F) de la partie de fixation (106),
- et le signal de fixation (Sₓ) n'est appliqué que lorsque le contact (130) et le capteur (132) sont en interaction ou en liaison de prise.

6. Dispositif de protection (100) selon l'une des revendications 2 à 5, comprenant un cadre (128), la surface d'accès (104) étant entourée par le cadre (128).

7. Dispositif de protection (100) selon l'une des revendications 2 à 6, dans lequel le capteur de déplacement (114) est fixe par rapport à la partie de fixation (106) se trouvant dans la position d'occultation (A), et une plage de détection (115) du capteur de déplacement (114) est orientée vers la partie de contrôle (116).

8. Dispositif de protection (100) selon la revendication 7, dans lequel, dans ou sur la partie de contrôle (116), un marqueur (117) en interaction avec le capteur de déplacement (114) est fixé sur le dispositif d'occultation (102), et dans lequel le signal de repos (S_{R}) n'est appliqué à la sortie (118) du capteur de déplacement (114) qu'en l'absence d'un mouvement relatif (R) du marqueur (117) par rapport au capteur de déplacement (114).

9. Dispositif de protection (100) selon l'une des revendications 2 à 6, dans lequel le dispositif d'occultation (102) est couplé en déplacement avec un élément de contrôle (134) mobile de façon telle qu'un mouvement relatif (R) de la partie de contrôle (116) provoque un mouvement de l'élément de contrôle (134), et dans lequel le capteur de déplacement (114) est conçu pour surveiller le mouvement de l'élément de contrôle (134), le signal de repos (S_{R}) n'étant appliqué à la sortie (118) du capteur de déplacement (114) qu'en l'absence d'un mouvement de l'élément de contrôle (134).

10. Dispositif de protection (100) selon la revendication 9, dans lequel l'élément de contrôle (134) est un moyen de guidage (136) du dispositif d'occultation (102) se déplaçant lors d'un mouvement relatif (R) de la partie de contrôle (116).

11. Dispositif de protection (100) selon la revendication 10, dans lequel le moyen de guidage (136) est un arbre rotatif (38) à partir duquel le dispositif d'occultation (102) peut être déroulé lors du passage de la position d'accès (Z) à la position d'occultation (A), et dans lequel le capteur de déplacement (114) est conçu pour contrôler la rotation de l'arbre (38).

12. Dispositif de protection (100) selon la revendication 11, dans lequel le capteur de déplacement (114) contient un capteur de position angulaire (140) couplé en déplacement avec l'arbre (38) pour contrôler la rotation de l'arbre (38), le signal de repos (S_{R}) n'étant appliqué à la sortie (118) du capteur de déplacement (114) qu'en l'absence de rotation.

13. Dispositif de protection (100) selon la revendication 12, dans lequel le capteur de position angulaire (140) contient un élément structuré (148) en forme de roue dentée couplée en déplacement avec l'arbre (38) et un élément capteur (156) détectant les dents (150) et entredents (154) de celle-ci, le signal de repos (S_{R}) n'étant appliqué à la sortie (118) du capteur de déplacement (114) que s'il n'y a pas de changement entre les détections d'une dent et d'un entredent.

14. Installation (142) dotée d'un dispositif de protection (100) selon l'une des revendications 2 à 13, dans laquelle
- l'installation (142) présente une zone de danger (144) accessible à travers la surface d'accès (104) à partir d'un espace extérieur (146), et
- le signal d'autorisation (S_{F}) est un signal de sécurité pour la zone de danger (144).

15. Installation (142) selon la revendication 14, dans laquelle l'installation (142) est une station d'essais de fonctionnement, en particulier une station d'essais multifonctions (10) qui comporte au moins une machine d'essais présentant la zone de danger (144).
